(19) Europäisches Patentamt
European Patent Office
Office européen des brevets

(11) **EP 4 675 911 A1**

(12) # EUROPÄISCHE PATENTANMELDUNG

(43) Veröffentlichungstag:
**07.01.2026 Patentblatt 2026/02**

(21) Anmeldenummer: **24186418.0**

(22) Anmeldetag: **04.07.2024**

(51) Internationale Patentklassifikation (IPC):
***H02P 6/32*** ***(2016.01)*** ***H02P 6/34*** ***(2016.01)***
***H02P 21/14*** ***(2016.01)*** ***H02P 21/22*** ***(2016.01)***

(52) Gemeinsame Patentklassifikation (CPC):
**H02P 6/32; H02P 6/34; H02P 21/14; H02P 21/22;**
H02P 2207/05

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Primetals Technologies Germany GmbH**
**91058 Erlangen (DE)**

(72) Erfinder:
- **Graichen, Knut**
  **90562 Heroldsberg (DE)**
- **Loehe, Klaus**
  **90768 Fürth (DE)**
- **Reinhard, Johannes**
  **91332 Heiligenstadt (DE)**

(74) Vertreter: **Metals@Linz**
**Primetals Technologies Austria GmbH**
**Intellectual Property Upstream IP UP**
**Turmstraße 44**
**4031 Linz (AT)**

(54) **OPTIMIERTE VORGABE VON SPANNUNGSSOLLWERTEN FÜR EINEN FREMDERREGTEN SYNCHRONMOTOR**

(57) Ein fremderregter Synchronmotor (1) weist einen Stator (2), einen Rotor (5), eine Erregerwicklung (6) und eine Motorwicklung (3) auf. Ein Sollwertermittler (9) nimmt eine momentane Drehzahl (ω) des Rotors (5) relativ zum Stator (2), ein von dem Synchronmotor (1) aufzubringendes Sollmoment (M*), eine zeitliche Änderung des Sollmoments (M*) und Stromistwerte (Iemax, Immax) für einen in der Erregerwicklung (6) fließenden Erregerstrom (Ie) und einen in der Motorwicklung (3) fließenden Motorstrom (Im) entgegen. Der Sollwertermittler (9) ermittelt in Abhängigkeit von der Drehzahl (ω), dem Sollmoment (M*), der zeitlichen Änderung des Sollmoments (M*) und der Stromistwerte (Iemax, Immax) Spannungssollwerte (Ue*, Um*) für eine den Erregerstrom (Ie) treibende Erregerspannung (Ue) und eine den Motorstrom (Im) treibende Motorspannung (Um), so dass der Synchronmotor (1) so weit wie möglich ein mit dem Sollmoment (M*) korrespondierendes Istmoment (M) aufbringt und das Istmoment (M) sich so weit wie möglich entsprechend der zeitlichen Änderung des Sollmoments (M*) ändert. Der Sollwertermittler (9) steuert eine mit der Erregerwicklung (6) und der Motorwicklung (3) verbundene Umrichtereinrichtung (8) entsprechend der ermittelten Spannungssollwerte (Ue*, Um*) an, so dass die Umrichtereinrichtung (8) mit den ermittelten Spannungssollwerten (Ue*, Um*) korrespondierende Spannungen (Ue, Um) an die Erregerwicklung (6) und die Motorwicklung (3) anlegt.

FIG 1

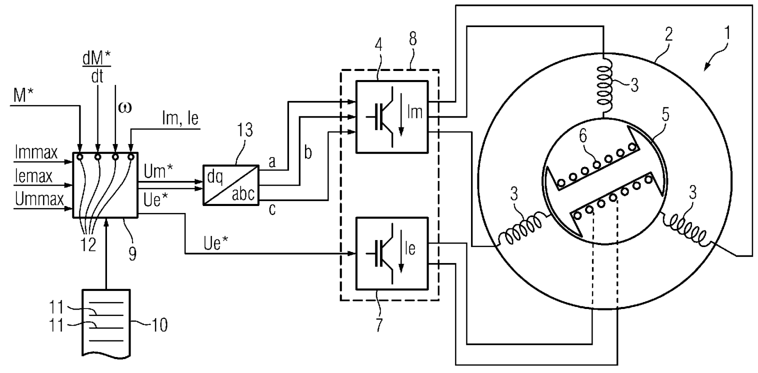


EP 4 675 911 A1

Processed by Luminess, 75001 PARIS (FR)

## Beschreibung

Gebiet der Technik

Die vorliegende Erfindung geht aus von einem Betriebsverfahren für einen fremderregten Synchronmotor, der einen Stator, einen Rotor, eine Erregerwicklung und eine Motorwicklung aufweist,

- wobei ein Sollwertermittler eine momentane Drehzahl des Rotors relativ zum Stator und ein von dem Synchronmotor aufzubringendes Sollmoment entgegennimmt,
- wobei der Sollwertermittler in Abhängigkeit von der Drehzahl und dem Sollmoment Spannungssollwerte für eine den Erregerstrom treibende Erregerspannung und eine den Motorstrom treibende Motorspannung ermittelt, so dass der Synchronmotor so weit wie möglich ein mit dem Sollmoment korrespondierendes Istmoment aufbringt,
- wobei der Sollwertermittler eine mit der Erregerwicklung und der Motorwicklung verbundene Umrichtereinrichtung entsprechend der ermittelten Spannungssollwerte ansteuert, so dass die Umrichtereinrichtung mit den ermittelten Spannungssollwerten korrespondierende Spannungen an die Erregerwicklung und die Motorwicklung anlegt.

Die vorliegende Erfindung geht weiterhin aus von einem Computerprogramm für einen Sollwertermittler, wobei das Computerprogramm Maschinencode umfasst, der von dem Sollwertermittler abarbeitbar ist, wobei die Abarbeitung des Maschinencodes durch den Sollwertermittler bewirkt, dass der Sollwertermittler ein derartiges Betriebsverfahren ausführt.

Die vorliegende Erfindung geht weiterhin aus von einem Sollwertermittler zum Ermitteln von Spannungssollwerten für eine Erregerspannung und eine Motorspannung eines fremderregten Synchronmotors, wobei der Sollwertermittler Eingänge zum Entgegennehmen einer momentanen Drehzahl des Synchronmotors und eines von dem Synchronmotor aufzubringenden Sollmoments aufweist und mit einem derartigen Computerprogramm programmiert ist, so dass er im Betrieb ein derartiges Betriebsverfahren ausführt.

Die vorliegende Erfindung geht weiterhin aus von einem Antrieb,

- wobei der Antrieb einen fremderregten Synchronmotor mit einem Stator, einem Rotor, einer Erregerwicklung und einer Motorwicklung aufweist,
- wobei der Antrieb eine Umrichtereinrichtung aufweist, die zum Anlegen einer Erregerspannung und zum Zuführen eines Erregerstroms mit der Erregerwicklung verbunden ist und zum Anlegen einer Motorspannung und zum Zuführen eines Motorstroms mit der Motorwicklung verbunden ist,
- wobei der Antrieb einen derartigen Sollwertermittler aufweist,
- wobei der Sollwertermittler zum Vorgeben von Spannungssollwerten für die Erregerspannung und die Motorspannung mit der Umrichtereinrichtung verbunden ist.

Stand der Technik

Die vorgenannten Gegenstände sind beispielsweise aus der EP 4 213 368 A1 bekannt.

Aus der DE 10 2014 223 014 A1 ist ein Betriebsverfahren für einen fremderregten Synchronmotor bekannt, der eine Erregerwicklung und eine Motorwicklung aufweist. Bei diesem Betriebsverfahren nimmt ein Sollwertermittler eine momentane Drehzahl des Synchronmotors und ein von dem Synchronmotor aufzubringendes Sollmoment entgegen. Dem Sollwertermittler sind Maximalwerte für einen der Erregerwicklung zugeführten Erregerstrom und eine den Motorstrom treibende Motorspannung und eine Leistung des Synchronmotors und auch Widerstandswerte der Erregerwicklung und der Motorwicklung bekannt. Der Sollwertermittler setzt ein Optimierungsproblem für einen Stromvektor an und löst es in Echtzeit. Der Stromvektor weist je eine Komponente für eine feldbildende Komponente des Motorstroms, eine momentbildende Komponente des Motorstroms und den Erregerstrom auf. Der Sollwertermittler ermittelt den Stromvektor im Rahmen der Lösung des Optimierungsproblems derart, dass in der Erregerwicklung und der Motorwicklung auftretende Verluste minimiert werden. Der Sollwertermittler ermittelt den Stromvektor derart, dass ein sich aufgrund des Erregerstroms und des Motorstroms ergebendes Istmoment des Synchronmotors dem Sollmoment entspricht. Der Sollwertermittler berücksichtigt als ergänzende Bedingung, dass der Betrag des Erregerstroms maximal den Maximalwert für den Erregerstrom erreicht und der Betrag der Motorspannung maximal den Maximalwert für die Motorspannung erreicht. Der Sollwertermittler gibt die Komponenten des ermittelten Stromvektors einer Stromregelungseinrichtung für eine Umrichtereinrichtung als Sollwerte vor, so dass die Stromregelungseinrichtung die Umrichtereinrichtung so ansteuert, dass die Umrichtereinrichtung der Erregerwicklung den Erregerstrom und der Motorwicklung den Motorstrom zuführt.

Zusammenfassung der Erfindung

In den letzten Jahren verzeichnete der Einsatz von fremderregten Synchronmotoren (FESM) einen starken Anstieg. Dies ist zurückzuführen auf einen hohen Wirkungsgrad über den gesamten Betriebsbereich und das hohe Drehmoment beim Anfahren. Ein weiterer Vorteil insbesondere gegenüber der permanenterregten Synchronmaschine (PESM) besteht darin, dass keine Materialien mit geringer Verfügbarkeit erforderlich sind, insbesondere keine seltenen Erden. Darüber hinaus stellt der über den Erregerstrom einstellbare magnetische Fluss des Rotors einen zusätzlichen Freiheitsgrad dar, der es erlaubt, energieeffizient und flexibel das gewünschte Drehmoment zu erreichen.

Die Regelung des Drehmomentes eines FESM geschieht im Regelfall in den feldorientierten Koordinaten. Hierfür ist eine Berechnung von Sollströmen aus der Vorgabe des zu erzielenden Drehmomentes in Abhängigkeit von den Motorparametern, den Umrichterdaten und der aktuellen Drehzahl erforderlich. Bedingungen an diese Sollströme sind insbesondere, dass ein gefordertes Drehmoment bestmöglich erreicht wird und weiterhin möglichst geringe Verluste entstehen. Die Berechnung muss innerhalb eines Regeltaktes abgeschlossen und damit echtzeitfähig sein. Physikalische Beschränkungen wie beispielsweise die maximal verfügbare Spannung der Umrichtereinrichtung und der maximale Strom im Motor müssen eingehalten und bei der Berechnung berücksichtigt werden.

Im Stand der Technik werden die Stromkomponenten des Motorstroms, also die feldbildende und die momentbildende Komponente, sowie der Erregerstrom teilweise unabhängig voneinander ermittelt. Das aufzubringende Sollmoment wird einem Stromfilter zugeführt, welches mittels einer Filterung einen Sollwert für die momentbildende Stromkomponente des Motorstroms (üblicherweise als q-Strom bezeichnet) ermittelt und diesen Sollwert der Stromregelungseinrichtung vorgibt. Weiterhin werden einem Feldschwächungsregler der Maximalwert der Motorspannung und die aktuelle Motorspannung zugeführt. Der Feldschwächungsregler ermittelt einerseits den Sollwert für Erregerstrom und gibt diesen Sollwert der Stromregelungseinrichtung vor. Weiterhin ermittelt der Feldschwächungsregler einen vorläufigen Sollwert für die feldbildende Komponente des Motorstroms (üblicherweise als d-Strom bezeichnet). Anhand der aktuellen Drehzahl des Synchronmotors wird unter Verwertung einer Kennlinie ein Korrekturwert für den Sollwert für die feldbildende Komponente des Motorstroms ermittelt. Der endgültige Sollwert für die feldbildende Komponente des Motorstroms wird durch Addieren dieses Korrekturwertes auf den vorläufigen Sollwert für die feldbildende Komponente des Motorstroms ermittelt. Der endgültige Sollwert für die feldbildende Komponente des Motorstroms wird wieder der Stromregelungseinrichtung vorgegeben.

Andere Ansätze für FESM beschäftigen sich zwar mit der Lösung dieses Problems. Es werden aber stets nur Teilprobleme gelöst. Weiterhin sind die Lösungen nicht echtzeitfähig. Andere Verfahren des Standes der Technik betrachten nur den Grunddrehzahlbereich (in dem ohne Feldschwächung gearbeitet werden kann) und verwenden im Feldschwächungsbereich, also für hohe Drehzahlen, Kennlinien für den Feldschwächregler. Bei diesen Verfahren werden somit Kennlinien benötigt, welche vorab aufgenommen werden müssen. Zudem werden der Motorstrom und der Erregerstrom unabhängig voneinander betrachtet, was suboptimale Lösungen erzeugt.

Ebenso ist im Stand der Technik bekannt, offline optimierte Look-Up-Tables für die Ströme zu verwenden, um einen optimalen Betriebspunkt in Abhängigkeit von der aktuellen Drehzahl und dem angeforderten Moment zu finden. Für diese Lösung ist jedoch eine sehr große Menge an Messdaten und ein gewisser Aufwand an Vorbereitung erforderlich. Die derart erstellten LookUp-Tables für den Motorstrom und den Erregerstrom sind unflexibel zur Laufzeit und müssen bei Änderung der Maschinenparameter komplett angepasst werden. Weiterhin sind die LookUp-Tables sehr speicherintensiv, wenn sie in hoher Genauigkeit und in Abhängigkeit von den Motorparametern verwendet werden sollen.

In einem üblichen Ansatz werden separate PI-Regler für den Erregerstrom und den Motorstrom verwendet. Auch die Verwendung eines Zustandsreglers, beispielsweise eines linearen quadratischen Reglers, ist bekannt. Beim Entwurf des Reglers werden nichtlineare Kopplungen zwischen den Strömen - insbesondere zwischen dem feldbildenden Strom und dem Erregerstrom und der Motordrehzahl - häufig vernachlässigt. Deshalb stützen sich derartige Regelungskonzepte auf eine linearisierte Dynamik, die mit einer auf stationären Spannungen basierenden Spannungsvorsteuerung gekoppelt ist. Dies ist nachteilig, weil die optimalen Ströme nur im stationären Betrieb erreicht werden. Außerdem ist die Parametrierung der Regelung schwierig und oftmals nur für bestimmte Betriebspunkte optimal.

Die Vorgehensweisen des Standes der Technik betrachten alle nur den statischen Fall, dass also ein bestimmtes Sollmoment vorgegeben wird, entsprechend dessen die Ansteuerung der Umrichtereinrichtung ermittelt wird. In der Regel werden ohne Berücksichtigung von dynamischen Änderungen die erforderlichen Stromsollwerte ermittelt, die einem unterlagerten Stromregler vorgegeben werden, der seinerseits unter Berücksichtigung von Stromistwerten die erforderlichen Spannungssollwerte ermittelt. In statischen Betriebszuständen werden mit Vorgehensweisen des Standes der Technik in der Regel zufriedenstellende Resultate erreicht, mit der Vorgehensweise gemäß der EP 4 213 368 A1 sogar sehr gute Resultate. Wenn sich Drehmomentvorgaben dynamisch ändern, stoßen die Vorgehensweisen des Standes der Technik jedoch an Grenzen.

Die Aufgabe der vorliegenden Erfindung besteht darin, Möglichkeiten zu schaffen, mittels derer auch bei sich dynamisch ändernden Drehmomentvorgaben noch eine gute Ansteuerung der Umrichtereinrichtung und damit des Synchronmotors erreicht werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art dadurch ausgestaltet,

- dass der Sollwertermittler zusätzlich auch eine zeitliche Änderung des Sollmoments und Stromistwerte für einen in der Erregerwicklung fließenden Erregerstrom und einen in der Motorwicklung fließenden Motorstrom entgegennimmt und
- dass der Sollwertermittler bei der Ermittlung der Spannungssollwerte zusätzlich auch die zeitliche Änderung des Sollmoments und die Stromistwerte berücksichtigt und die Spannungssollwerte weiterhin derart ermittelt, dass das Istmoment sich so weit wie möglich entsprechend der zeitlichen Änderung des Sollmoments ändert.

Durch die Berücksichtigung auch der zeitlichen Änderung des Sollmoments und die direkte Ermittlung der Spannungssollwerte können auch bei sich rasch dynamisch ändernden Momentanforderungen überlegene Ansteuerzustände für den Synchronmotor ermittelt werden.

Vorzugsweise ist vorgesehen,

- dass der Sollwertermittler in Abhängigkeit von der Drehzahl und dem Sollmoment Stromsollwerte für den Erregerstrom und den Motorstrom ermittelt, so dass der Synchronmotor so weit wie möglich das mit dem Sollmoment korrespondierende Istmoment aufbringt,
- dass der Sollwertermittler weiterhin zeitliche Änderungen der Stromsollwerte ermittelt, so dass das Istmoment sich so weit wie möglich entsprechend der zeitlichen Änderung des Sollmoments ändert, und
- dass der Sollwertermittler sodann anhand der Stromsollwerte, der zeitlichen Änderungen der Stromsollwerte, der Drehzahl und der Stromistwerte die Spannungssollwerte ermittelt.

Dadurch kann eine systematische, im Betrieb sehr robuste Ermittlung der Spannungssollwerte erfolgen. Insbesondere können die Spannungssollwerte derart ermittelt werden, dass der Erregerstrom und der Motorstrom ihren Stromsollwerten und deren zeitlichen Änderungen nach Art einer asymptotischen Folgeregelung folgen.

Vorzugsweise ermittelt der Sollwertermittler die Stromsollwerte ohne Berücksichtigung der zeitlichen Änderung des Sollmoments und ermittelt die zeitliche Änderung der Stromsollwerte unter Berücksichtigung des Sollmoments und der zeitlichen Änderung des Sollmoments. Dadurch vereinfacht sich die Ermittlung der Stromsollwerte.

Vorzugsweise ist vorgesehen, dass der Sollwertermittler zum Ermitteln der Stromsollwerte ein strombezogenes Optimierungsproblem ansetzt und löst es in Echtzeit. Besonders bevorzugt ist hierbei, wenn der Sollwertermittler die Stromsollwerte derart ermittelt, dass durch den Erregerstrom und den Motorstrom hervorgerufene Kupferverluste in der Erregerwicklung und der Motorwicklung minimiert werden. Eine hierfür besonders geeignete Vorgehensweise ist umfassend in der EP 4 213 368 A1 erläutert. Im Rahmen der vorliegenden Erfindung ist insbesondere das Optimierungsproblem 1 der EP 4 213 368 A1 relevant, das dort in Verbindung mit deren FIG 4 erläutert ist.

Für die Ermittlung der zeitlichen Änderung der Stromsollwerte stehen verschiedene Möglichkeiten zur Verfügung. Im einfachsten Fall ist die zeitliche Änderung der Stromsollwerte indirekt proportional zur Wurzel des Sollmoments und proportional zur zeitlichen Ableitung des Sollmoments.

Vorzugsweise sind dem Sollwertermittler Maximalwerte für die Beträge des Erregerstroms und des Motorstroms bekannt. In diesem Fall ist der Sollwertermittler in der Lage, die Maximalwerte für die Beträge des Erregerstroms und des Motorstroms im Rahmen der Ermittlung der Stromsollwerte zu beachten. Dadurch ergeben sich besonders gute Ansteuerungen des Synchronmotors. Der Begriff "beachten" bedeutet nicht nur, dass der Sollwertermittler die entsprechenden Maximalwerte berücksichtigt, sondern dass er die Stromsollwerte derart ermittelt, dass die Maximalwerte eingehalten werden.

Vorzugsweise setzt der Sollwertermittler zum Ermitteln der Spannungssollwerte ein spannungsbezogenes Optimierungsproblem an, in das die Stromsollwerte und die zeitlichen Änderungen der Stromsollwerte als Eingangsgrößen eingehen und das als Ausgangsgrößen die Spannungssollwerte liefert, und löst das spannungsbezogenes Optimierungsproblem in Echtzeit. Diese Vorgehensweise liefert besonders gute Ergebnisse.

Vorzugsweise sind hierbei dem Sollwertermittler Maximalwerte für die Beträge der Erregerspannung und der Motorspannung bekannt. Dadurch ist der Sollwertermittler in der Lage, die Maximalwerte für die Erregerspannung und die Motorspannung im Rahmen des Lösens des Optimierungsproblems zu beachten. Der Begriff "beachten" bedeutet wie zuvor nicht nur, dass der Sollwertermittler die entsprechenden Maximalwerte berücksichtigt, sondern dass er die Spannungssollwerte derart ermittelt, dass die Maximalwerte eingehalten werden.

Zum Lösen des spannungsbezogenen Optimierungsproblems geht der Sollwertoptimierer vorzugsweise in mehreren aufeinander abgestimmten Schritten vor. Vorzugsweise löst der Sollwertermittler im Rahmen des Lösens des spannungsbezogenen Optimierungsproblems zunächst das spannungsbezogene Optimierungsproblem als solches, also ohne Berücksichtigung der Maximalwerte für die Beträge der Erregerspannung und der Motorspannung. Dadurch ermittelt der Sollwertoptimierer vorläufige Spannungssollwerte. Sodann prüft der Sollwertoptimierer, ob die vorläufigen Spannungssollwerte die Maximalwerte für die Beträge der Erregerspannung und der Motorspannung einhalten. Wenn dies der Fall ist, kann der Sollwertoptimierer die vorläufigen Spannungssollwerte direkt und ohne weiteres als Spannungssollwerte für die Erregerspannung und die Motorspannung übernehmen. Weitere Schritte sind nicht mehr erforderlich.

Wenn die vorläufigen Spannungssollwerte die Maximalwerte für die Beträge der Erregerspannung und/oder der Motorspannung nicht einhalten, also der Betrag der Erregerspannung größer als der zugehörige Maximalwert ist und/oder der Betrag der Motorspannung größer als der zugehörige Maximalwert ist, sind weitere Schritte erforderlich. In diesem Fall geht der Sollwertoptimierer wie folgt vor:
Zunächst ermittelt der Sollwertoptimierer in einem feldorientierten Koordinatensystem obere und untere Ecken eines regulären Prismas. Das von dem Prisma umschlossene Gebiet ist durch die Maximalwerte für die Beträge der Erregerspannung und der Motorspannung und eine aktuelle Drehstellung des Rotors relativ zum Stator bestimmt. Der Begriff "reguläres Prisma" bedeutet, wie allgemein üblich, ein gerades Prisma, dessen Grundfläche ein regelmäßiges Polygon ist, im vorliegenden Fall üblicherweise ein regelmäßiges Sechseck. Ein gerades Prisma ist, wie ebenfalls allgemein üblich, ein Prisma, dessen Deckfläche 1:1 über der Grundfläche liegt und dessen Mantelfläche daher aus Rechtecken besteht.

Bezüglich dieses Prismas wählt der Sollwertermittler eine erste und eine zweite obere Ecke aus. Die erste obere Ecke ist diejenige Ecke des Prismas, bei welcher die Erregerspannung ihren Maximalwert aufweist und die in dem feldorientierten Koordinatensystem gemäß einer Normvorschrift den geringsten Abstand zu den vorläufigen Spannungssollwerten aufweist. Die zweite obere Ecke ist eine von der ersten ausgewählten Ecke verschiedene Ecke. Es handelt sich um diejenige Ecke, die nach der ersten ausgewählten Ecke gemäß der Normvorschrift den geringsten Abstand zum vorläufigen Spannungsvektor aufweist. Die Normvorschrift kann insbesondere von den Induktivitäten der Erregerwicklung und der Motorwicklung abhängen.

Ausgehend von den beiden ausgewählten oberen Ecken ermittelt der Sollwertermittler sodann einen ersten bis fünften Spannungsvektor. Diese Spannungsvektoren sind dadurch charakterisiert, dass sie in dem feldorientierten Koordinatensystem gemäß der Normvorschrift jeweils den geringsten Abstand zu den vorläufigen Spannungssollwerten aufweisen. Sie unterscheiden sich durch die Nebenbedingungen, die bei der Ermittlung des jeweiligen Spannungsvektors berücksichtigt werden. Konkret wird wie folgt vorgegangen:

- Bei der Ermittlung des ersten Spannungsvektors wird der Betrag der Erregerspannung fest auf seinen Maximalwert gesetzt. Die Beschränkung des Betrages der Motorspannung wird aber nicht berücksichtigt.
- Bei der Ermittlung des zweiten Spannungsvektors liegt die Motorspannung in dem feldorientierten Koordinatensystem in einer Ebene, die durch die erste und die zweite ausgewählte obere Ecke des Prismas und die zugehörigen unteren Ecken des Prismas definiert ist. Weder Beschränkung des Betrages der Erregerspannung noch die Beschränkung des Betrages der Motorspannung werden berücksichtigt.
- Bei der Ermittlung des dritten Spannungsvektors wird berücksichtigt, dass die Motorspannung den Wert der ersten ausgewählten oberen Ecke des Prismas aufweist. Die Beschränkung des Betrages der Erregerspannung wird aber nicht berücksichtigt.
- Bei der Ermittlung des vierten Spannungsvektors wird berücksichtigt, dass die Motorspannung den Wert der zweiten ausgewählten oberen Ecke des Prismas aufweist. Die Beschränkung des Betrages der Erregerspannung wird aber nicht berücksichtigt.
- Bei der Ermittlung des fünften Spannungsvektors wird berücksichtigt, dass der Betrag der Erregerspannung seinen Maximalwert aufweist und die Motorspannung auf einer Geraden liegt, die durch die erste und die zweite ausgewählte obere Ecke des Prismas definiert ist. Die Beschränkung des Betrages der Motorspannung wird aber nicht berücksichtigt.

Sodann wird eine Menge von Spannungsvektoren gebildet. Diese Menge enthält insgesamt mindestens sieben Spannungsvektoren, nämlich den ersten bis fünften Spannungsvektor und die erste und die zweite ausgewählte obere Ecke. Optional kann die Menge von Spannungsvektoren zusätzlich auch die beiden mit den beiden ausgewählten oberen Ecken korrespondierenden unteren Ecken enthalten. Aus dieser Menge greift der Sollwertermittler denjenigen Spannungsvektor heraus, bei dem die Beträge der Erregerspannung und der Motorspannung die Maximalwerte für die Beträge der Erregerspannung und die Motorspannung einhalten und der in dem feldorientierten Koordinatensystem gemäß der Normvorschrift den geringsten Abstand zu den vorläufigen Spannungssollwerten aufweist.

Das Herausgreifen des "richtigen" Spannungsvektors kann in zwei Schritten erfolgen. Im ersten Schritt entfernt der Sollwertermittler aus der zuvor gebildeten Menge von Spannungsvektoren diejenigen Vektoren, bei denen die Beträge der Erregerspannung und/oder der Motorspannung die Maximalwerte für die Beträge der Erregerspannung und/oder die Motorspannung nicht einhalten. Die verbleibende Menge ist in jedem Fall nicht leer. Denn sie enthält zumindest die erste und die zweite ausgewählte obere Ecke und - falls mit berücksichtigt - auch die beiden korrespondierenden unteren Ecken. Aus der verbleibenden Menge greift der Sollwertermittler dann in einem zweiten Schritt denjenigen Spannungsvektor heraus, der in dem feldorientierten Koordinatensystem gemäß der Normvorschrift den geringsten Abstand zu den vorläufigen Spannungssollwerten aufweist.

Den herausgegriffenen Spannungsvektor übernimmt der Sollwertermittler - unabhängig davon, ob dies in einem einheitlichen oder wie vorstehend erläutert in zwei aufeinanderfolgenden Schritten erfolgt - als Spannungssollwerte für die Erregerspannung und die Motorspannung.

Auch losgelöst von den vorstehend erläuterten konkreten Vorgehensweisen, bei welcher zunächst im Rahmen der Ermittlung der Stromsollwerte die Maximalwerte für die Ströme und sodann im Rahmen der Ermittlung der Spannungssollwerte die Maximalwerte für die Spannungen beachtet werden, ist es möglich, dass dem Sollwertermittler Maximalwerte für die Beträge des Erregerstroms, der Erregerspannung, des Motorstroms und der Motorspannung bekannt sind und der Sollwertermittler die Maximalwerte im Rahmen der (Gesamt-)Ermittlung der Spannungssollwerte beachtet. Beispielsweise können die Maximalwerte für die Beträge der Spannungen - gegebenenfalls zusätzlich zu einer nochmaligen Berücksichtigung im Rahmen des Lösens des spannungsbezogenen Optimierungsproblems - auch bereits bei der Ermittlung der Stromsollwerte, gegebenenfalls im Rahmen des Lösens des strombezogenen Optimierungsproblems, berücksichtigt werden.

Vorzugsweise prüft der Sollwertermittler, ob der Betrag des aufzubringenden Sollmoments einen vorbestimmten Maximalwert einhält. Bejahendenfalls verwertet der Sollwertermittler das aufzubringende Sollmoment und die zeitliche Änderung des Sollmoments ohne Modifikation. Verneinendenfalls begrenzt er den Betrag des aufzubringenden Sollmoments auf den Maximalwert und setzt die zeitliche Änderung des Sollmoments auf 0. Dadurch bewegt sich der Sollwertermittler immer in dem für ihn zulässigen Bereich, so dass auch die ermittelten Spannungssollwerte ordnungsgemäß sind.

Die Aufgabe wird weiterhin durch ein Computerprogramm mit den Merkmalen des Anspruchs 13 gelöst. Erfindungsgemäß bewirkt die Abarbeitung des Computerprogramms durch den Sollwertermittler, dass der Sollwertermittler ein erfindungsgemäßes Betriebsverfahren ausführt.

Die Aufgabe wird weiterhin durch einen Sollwertermittler mit den Merkmalen des Anspruchs 14 gelöst. Erfindungsgemäß ist der Sollwertermittler mit einem erfindungsgemäßen Computerprogramm programmiert, so dass der Sollwertermittler im Betrieb ein erfindungsgemäßes Betriebsverfahren ausführt.

Die Aufgabe wird weiterhin durch einen Antrieb mit den Merkmalen des Anspruchs 15 gelöst. Erfindungsgemäß ist bei einem Antrieb der eingangs genannten Art der Sollwertermittler als erfindungsgemäßer Sollwertermittler ausgebildet.

## Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1 einen Antrieb,
FIG 2 ein Ablaufdiagramm,
FIG 3 ein Ablaufdiagramm,
FIG 4 ein Ablaufdiagramm,
FIG 5 ein strombezogenes Optimierungsproblem,
FIG 6 ein Ablaufdiagramm,
FIG 7 ein Ablaufdiagramm und
FIG 8 ein Koordinatensystem mit einem Prisma.

## Beschreibung der Ausführungsformen

Gemäß FIG 1 weist ein Antrieb einen fremderregten Synchronmotor 1 auf. Der Synchronmotor 1 weist einen Stator 2 mit einer darin angeordneten Motorwicklung 3 auf. Der Motorwicklung 3 wird über einen Umrichter 4 ein Motorstrom Im zugeführt. Die Motorwicklung 3 ist in der Regel als Drehstromwicklung ausgeführt. Der Motorstrom Im umfasst daher die Phasenströme der Phasen a, b, c eines Drehstromsystems. Der Synchronmotor 1 weist weiterhin einen Rotor 5 mit einer mitrotierenden Erregerwicklung 6 auf. Der Erregerwicklung 6 wird über einen weiteren Umrichter 7 ein Erregerstrom Ie zugeführt. Der Umrichter 4 und der Umrichter 7 bilden zusammen eine Umrichtereinrichtung 8.

Die Umrichtereinrichtung 8 - genauer: der Umrichter 4 - ist zum Anlegen einer Motorspannung Um bzw. von Phasenspannungen und zum Zuführen des Motorstroms Im bzw. der Phasenströme mit den einzelnen Strängen der Motorwicklung 3 verbunden. Die Phasenspannungen treiben die Phasenströme. Die Phasenspannungen weisen zu jedem Zeitpunkt einen Wert auf, dessen Betrag maximal bei einem Maximalwert Ummax liegt. In analoger Weise weist auch Betrag der Phasenströme zu jedem Zeitpunkt einen Wert auf, dessen Betrag maximal bei einem Maximalwert Immax liegt.

Weiterhin ist die Umrichtereinrichtung 8 - genauer: der Umrichter 7 - zum Anlegen einer Erregerspannung Ue und zum Zuführen des Erregerstroms Ie mit der Erregerwicklung 6 verbunden. Die Erregerspannung Ue treibt den Erregerstrom Ie. Der Betrag der Erregerspannung Ue liegt maximal bei einem Maximalwert Uemax. Ebenso liegt auch der Betrag des Erregerstroms Ie maximal bei einem Maximalwert Iemax.

Im Gegensatz zu der Motorspannung Um und dem Motorstrom Im, deren Komponenten Wechselgrößen sind, sind die Erregerspannung Ue und der Erregerstrom Ie in der Regel Gleichgrö-ßen. Sie können zwar Werte kleiner als 0 aufweisen. In der Regel sind sie jedoch positiv.

Die Regelung des fremderregten Synchronmotors 1 erfolgt im Stand der Technik und auch im Rahmen der vorliegenden Erfindung in einem feldorientierten Koordinatensystem, d.h. in den sogenannten dq-Koordinaten. Die d-Komponente des Motorstroms Im ist die feldbildende Komponente Id, die q-Komponente die momentbildende Komponente Iq. In analoger Weise weist die Motorspannung Um im feldorientierten Koordinatensystem ebenfalls eine d- und eine q-Komponente auf, nachfolgend als feldbildende Ud und momentbildende Spannungskomponente Uq bezeichnet. Die Umrechnung von den Phasenspannungen bzw. Phasenströmen in die entsprechenden Komponenten Ud, Uq bzw. Id, Iq im feldorientierten Koordinatensystem und zurück ist Fachleuten allgemein bekannt.

Das feldorientierte Koordinatensystem ist zunächst nur ein zweidimensionales Koordinatensystem, das die d- und die q-Komponenten der Motorspannung Um und des Motorstroms Im umfasst. Im Rahmen der vorliegenden Erfindung wird dieses Koordinatensystem um eine dritte Komponente für die Erregerwicklung 6 und deren elektrische Größen (Erregerstrom Ie, Erregerspannung Ue und weitere) ergänzt. Auch diese Ergänzung ist allgemein üblich und Fachleuten allgemein bekannt.

Der Sollwertermittler 9 ist der eigentliche Kerngegenstand der vorliegenden Erfindung. Der Sollwertermittler 9 ist mit einem Computerprogramm 10 programmiert. Das Computerprogramm 10 umfasst Maschinencode 11, der von dem Sollwertermittler 9 abarbeitbar ist. Aufgrund der Abarbeitung des Maschinencodes 11 durch den Sollwertermittler 9 führt der Sollwertermittler 9 ein Betriebsverfahren aus, das später noch näher erläutert wird. Vor der eigentlichen Erläuterung der Erfindung werden zum besseren Verständnis der vorliegenden Erfindung jedoch zunächst die elektrotechnischen Grundlagen und Sachverhalte erläutert, die bei einem fremderregten Synchronmotor 1 gegeben sind. Diese Grundlagen und Sachverhalte werden nachstehend in Verbindung mit verschiedenen Istgrößen erläutert. Sie gelten in analoger Weise aber auch bei Verwendung der korrespondierenden Sollgrößen.

Bei einem fremderregten Synchronmotor gilt zwischen den Spannungen Ud, Uq, Ue und den Strömen Id, Iq, Ie die Beziehung

$$\begin{bmatrix} Ud \\ Uq \\ Ue \end{bmatrix} = \begin{bmatrix} RS & 0 & 0 \\ 0 & RS & 0 \\ 0 & 0 & \mathrm{Re} \end{bmatrix} \cdot \begin{bmatrix} Id \\ Iq \\ Ie \end{bmatrix} + \frac{d}{dt} \begin{bmatrix} \psi d \\ \psi q \\ \psi e \end{bmatrix} + \omega \cdot \begin{bmatrix} -\psi q \\ \psi d \\ 0 \end{bmatrix} \quad (1)$$

mit

$$\begin{bmatrix} \psi d \\ \psi q \\ \psi e \end{bmatrix} = \begin{bmatrix} Ld & 0 & Lm \\ 0 & Lq & 0 \\ \frac{3}{2} \cdot Lm & 0 & Le \end{bmatrix} \cdot \begin{bmatrix} Id \\ Iq \\ Ie \end{bmatrix}. \quad (2)$$

Dabei weisen die verschiedenen, in den Gleichungen 1 und 2 verwendeten Größen folgende Bedeutung auf:

- Ud, Uq und Ue sind die bereits eingeführten Spannungskomponenten des Spannungsvektors U.
- RS und Re sind die Widerstände der Motorwicklung 3 und der Erregerwicklung 6; sie bilden zusammen die Widerstandsmatrix R. Sie können in der Regel als konstant angenommen werden. Es ist jedoch ohne weiteres auch möglich, eine Temperaturabhängigkeit mit zu berücksichtigen.

- Id, Iq und Ie sind die bereits eingeführten Stromkomponenten des Stromvektors I.
- $\psi$d, $\psi$q und $\psi$e sind die magnetischen Flüsse in der d-, der q- und der e-Achse. Sie bilden zusammen den Flussvektor $\psi$.
- Ld, Lq und Le sind die Selbstinduktivitäten in der d-, der q- und der e-Achse, Lm ist die Gegeninduktivität der Erregerwicklung 6. Die Induktivitäten Ld, Lq, Le und Lm bilden zusammen die Induktivitätsmatrix L. Ergänzend wird darauf hingewiesen, dass genau genommen an denjenigen Stellen der Induktivitätsmatrix L, an denen vorliegend "0" eingetragen ist, die Gegeninduktivitäten zwischen der d- und der q-Achse stehen müssten. Diese sind jedoch in der Regel deutlich geringer als die Selbstinduktivitäten Ld und Lq in der d- und der q-Achse und können daher vernachlässigt werden

- ω ist die elektrische Drehzahl. Sie ist mit der mechanischen Drehzahl n des Rotors 5 gemäß der Beziehung ω/n = Zp verknüpft, wobei Zp die Polpaarzahl des Synchronmotors 1 ist. Nachstehend wird stets die elektrische Drehzahl ω verwendet, außer wenn es entscheidend auf die mechanische Drehzahl n ankommt.

Unter der (in der Regel ohne weiteres zulässigen) Annahme, dass die Induktivitäten Ld, Lq, Le und Lm konstant sind, gilt weiterhin

$$\frac{d}{dt}\psi = L \cdot \frac{d}{dt} I \,. \qquad (3)$$

Somit kann das dynamische Modell des fremderregten Synchronmotors 1 in der Form

$$\frac{d}{dt} I = L^{-1}\left(U - R \cdot I - \omega \cdot LR \cdot i\right) \qquad (4)$$

dargestellt werden, wobei

$$LR = \begin{bmatrix} 0 & Lq & 0 \\ Ld & 0 & Lm \\ 0 & 0 & 0 \end{bmatrix} \qquad (5)$$

gilt.

Die Kupferverluste VK des fremderregten Synchronmotors 1 sind durch

$$VK = \frac{3}{2} \cdot RS \cdot \left(Id^2 + Iq^2\right) + \mathrm{Re} \cdot Ie^2 \qquad (6)$$

bzw. in Vektorschreibweise durch

$$VK = I^T \cdot \begin{bmatrix} \frac{3}{2} RS & 0 & 0 \\ 0 & \frac{3}{2} RS & 0 \\ 0 & 0 & \mathrm{Re} \end{bmatrix} \cdot I \qquad (7)$$

gegeben.

Das erzeugte Drehmoment M ist durch die Stromkomponenten Id, Iq und Ie und die Induktivitäten Ld, Lq, Le und Lm bestimmt. Es ergibt sich zu

$$M = \frac{3}{2} \cdot I^T \cdot \begin{bmatrix} 0 & \Delta L/2 & 0 \\ \Delta L/2 & 0 & Lm/2 \\ 0 & Lm/2 & 0 \end{bmatrix} \cdot I \,, \qquad (8)$$

wobei ΔL = Ld-Lq ist. Die in Gleichung 8 verwendete Matrix wird nachstehend als L2 bezeichnet.

Weiterhin gilt für die mechanische Bewegung des Rotors 5 die Beziehung

$$\frac{d}{dt}\omega = \frac{Zp}{J}\cdot\left(M - \frac{D}{Zp}\cdot\omega - ML\right), \tag{9}$$

wobei J das Trägheitsmoment des Synchronmotors 1 bzw. des Rotors 5 ist und D der Reibkoeffizient ist. ML bezeichnet das Lastmoment. Es umfasst alle Lasten, die mit dem Synchronmotor 1 bzw. dem Rotor 5 gekoppelt sind.

Schließlich gilt noch die Beziehung $\omega = d\theta/dt$, wobei $\theta$ der elektrische Rotorwinkel ist.

Aufgrund dieser Beziehungen ist das Zustandsmodell des fremderregten Synchronmotors 1 im Ergebnis durch folgende Beziehungen gegeben:

$$\frac{dI}{dt} = -L^{-1}\cdot R\cdot I - \omega\cdot L^{-1}\cdot LR\cdot I + L^{-1}\cdot U, \tag{10}$$

$$\frac{d\omega}{dt} = -\frac{D}{J}\cdot\omega + \frac{3Zp}{2J}\cdot I^{T}\cdot L2\cdot I \quad \text{und} \tag{11}$$

$$\frac{d\vartheta}{dt} = \omega. \tag{12}$$

Beim Betrieb des fremderregten Synchronmotors 1 und der Umrichtereinrichtung 8 sind weiterhin Systembeschränkungen gegeben. So gilt beispielsweise für den Spannungsvektor U die Beschränkung

$$-K\cdot U\max \le F(\vartheta)\cdot U \le K\cdot U\max \tag{13}$$

mit

$$K = \begin{bmatrix} 2 & 0 \\ 2 & 0 \\ 1 & 0 \\ 0 & 1 \end{bmatrix}, \tag{14}$$

$$U\max = \begin{bmatrix} Um\max \\ Ue\max \end{bmatrix} \quad \text{und} \tag{15}$$

$$F(\vartheta) = \begin{bmatrix} \cos\vartheta & -\sin\vartheta & 0 \\ \sin\vartheta & \cos\vartheta & 0 \\ 0 & 0 & 1 \end{bmatrix}. \tag{16}$$

Zum Schutz der Umrichtereinrichtung 8 und des fremderregten Synchronmotors 1 vor Überhitzung sollte weiterhin beachtet werden, dass die Phasenströme ihren zulässigen Maximalwert Immax einhalten und der Erregerstrom Ie ebenfalls seinen Maximalwert Iemax einhält. Die Beschränkung der Phasenströme kann im feldorientierten Koordinatensystem durch die Beziehung

$$Id^2 + Iq^2 \le \mathrm{Im}\max^2 \tag{17}$$

beachtet werden. Die Beschränkung des Erregerstroms Ie kann direkt durch die Beziehung

$$|Ie| \le Ie\max \tag{18}$$

beachtet werden. Die Maximalwerte Immax und Iemax können konstant oder temperaturabhängig sein.

Aufbauend auf den vorstehend erläuterten elektrotechnischen Grundlagen und Sachverhalten wird nachstehend das erfindungsgemäße Betriebsverfahren - zunächst in Verbindung mit FIG 2, danach unter zusätzlicher Bezugnahme auf die weiteren FIG - näher erläutert.

Gemäß FIG 2 nimmt der Sollwertermittler 9 in einem Schritt S1 verschiedene Größen entgegen. Der Sollwertermittler 9 weist entsprechend der Darstellung in FIG 1 zu diesem Zweck entsprechende Eingänge 12 auf. Bei den entgegengenommenen Größen handelt es sich um die momentane Drehzahl ω des Rotors 5 relativ zum Stator 2, ein von dem Synchronmotor 1 aufzubringendes Sollmoment M*, eine zeitliche Änderung dM*/dt des Sollmoments M* und Stromistwerte Ie, Im für den in der Erregerwicklung 6 fließenden Erregerstrom Ie und den in der Motorwicklung 3 fließenden Motorstrom Im. Der Motorstrom Im ist in der Regel durch die Phasenströme gegeben und wird in diesem Fall vor dem Zuführen zum Sollwertermittler 9 oder von dem Sollwertermittler 9 in das feldorientierte Koordinatensystem umgerechnet. In jedem Fall ist dem Sollwertermittler 9 somit der Stromvektor I als Istwert bekannt.

In einem Schritt S2 ermittelt der Sollwertermittler 9 einen Sollwert Ue* für die Erregerspannung Ue und einen Sollwert Um* für die Motorspannung Um. Die Ermittlung erfolgt in Abhängigkeit von der Drehzahl ω, dem Sollmoment M*, der zeitlichen Änderung dM*/dt des Sollmoments M* und dem Stromvektor I. Die Ermittlung erfolgt derart, dass der Synchronmotor 1 so weit wie möglich ein mit dem Sollmoment M* korrespondierendes Istmoment M aufbringt und das Istmoment M sich so weit wie möglich entsprechend der zeitlichen Änderung dM*/dt des Sollmoments M* ändert. Die Ermittlung des Sollwertes Um* für die Motorspannung Um erfolgt in der Regel im feldorientierten Koordinatensystem. Die Gesamtheit der Sollwerte Ud*, Uq* und Ue* wird nachstehend als Sollwert U* für den Spannungsvektor U bezeichnet. In der Regel wird der Sollwert U* von dem Sollwertermittler 9 oder in einer dem Sollwertermittler 9 nachgeordneten Umrechnungseinrichtung 13 in entsprechende Sollwerte für die Phasenspannungen umgerechnet.

In einem Schritt S3 steuert der Sollwertermittler 9 die Umrichtereinrichtung 8 entsprechend der ermittelten Spannungssollwerte Ue*, Um* an. Die Umrichtereinrichtung 8 legt dadurch mit den ermittelten Spannungssollwerten Ue*, Um* korrespondierende Spannungen Ue, Ua, Ub, Uc an die Erregerwicklung 6 und die Motorwicklung 3 an.

Die Ausführung der Schritte S1 bis S3 erfolgt iterativ immer wieder in Echtzeit mit dem Regeltakt des Synchronmotors 1. Der Regeltakt liegt meist im Bereich von 250 μs oder darunter, beispielsweise bei 125 μs oder 62,5 μs.

In vielen Fällen sind entsprechend der Darstellung in FIG 3 zusätzlich Schritte S11 und S12 vorhanden, die nach dem Schritt S1 und vor dem Schritt S2 ausgeführt werden. Wenn die Schritte S11 und S12 vorhanden sind, prüft der Sollwertermittler 9 im Schritt S11, ob der Betrag des aufzubringenden Sollmoments M* einen vorbestimmten Maximalwert Mmax einhält. Wenn dies der Fall ist, überspringt der Sollwertermittler 9 den Schritt S12. Anderenfalls führt der Sollwertermittler 9 den Schritt S12 aus. Im Schritt S12 begrenzt der Sollwertermittler 9 den Betrag des aufzubringenden Sollmoments M* auf den Maximalwert Mmax. Das Vorzeichen des aufzubringenden Sollmoments M* wird beibehalten. Weiterhin setzt der Sollwertermittler 9 im Schritt S12 die Änderung dM*/dt des Sollmoments M* auf 0.

In der vorliegenden Erfindung ist der Schritt S2 der entscheidende Schritt. Von Bedeutung ist, dass der Schritt S2 nicht durch eine Aufteilung in eine Ermittlung von Stromsollwerten für einen Stromregler und eine nachfolgende Stromregelung realisiert ist, wobei der Stromregler die Spannungssollwerte Ue*, Um* ermittelt, sondern dass direkt die Spannungssollwerte Ue*, Um* ermittelt werden.

Beispielsweise kann der Sollwertermittler 9 zur Implementierung des Schrittes S2 entsprechend der Darstellung in FIG 4 zunächst in einem Schritt S21 einen Sollwert I* für den Stromvektor I ermitteln. Diese Ermittlung erfolgt derart, dass der Synchronmotor 1 so weit wie möglich das mit dem Sollmoment M* korrespondierende Istmoment M aufbringt. Vorzugsweise erfolgt die Ermittlung des Stromsollwertes I* derart, dass Kupferverluste VK minimiert werden, die durch den Erregerstrom Ie und den Motorstrom Im in der Erregerwicklung 6 und der Motorwicklung 3 hervorgerufen werden. Die Ermittlung des Schrittes S21 erfolgt in Abhängigkeit von der Drehzahl ω und dem Sollmoment M*. Die zeitliche Änderung dM*/dt des Sollmoments M* wird in der Regel nicht berücksichtigt. Eine mögliche Ausgestaltung des Schrittes S21 wird später noch näher erläutert werden.

In einem Schritt S22 ermittelt der Sollwertermittler 9 weiterhin eine zeitliche Änderung dI*/dt des Sollwertes I* für den Stromvektor I. Die Ermittlung erfolgt derart, dass das Istmoment M sich so weit wie möglich entsprechend der zeitlichen Änderung dM*/dt des Sollmoments M* ändert. Im Rahmen der Ermittlung der zeitlichen Änderung dI*/dt des Sollwertes I* für den Stromvektor I berücksichtigt der Sollwertermittler 9 in aller Regel unter anderem die zeitliche Änderung dM*/dt des Sollmoments M*. Eine mögliche Ausgestaltung des Schrittes S22 wird später noch näher erläutert werden.

In einem Schritt S23 ermittelt der Sollwertermittler 9 sodann die Spannungssollwerte U*, also den Sollwert U* des Spannungsvektors U. Die Ermittlung erfolgt anhand der Stromsollwerte I*, der zeitlichen Änderungen dI*/dt der Stromsollwerte I*, der Drehzahl ω und der Stromistwerte I. Auch hier erfolgt die Ermittlung derart, dass das Istmoment M so weit wie möglich mit dem Sollmoment M* korrespondiert und das Istmoment M sich so weit wie möglich entsprechend der zeitlichen Änderung dM*/dt des Sollmoments M* ändert, im Ergebnis also so weit wie möglich der ermittelte Sollwert I* für den Stromvektor I und dessen zeitliche Änderung dI*/dt erreicht werden.

Beispielsweise kann der Sollwertermittler 9 zur Implementierung des Schrittes S21 ein strombezogenes Optimierungsproblem ansetzen und das strombezogene Optimierungsproblem in Echtzeit lösen. Ein geeignetes Optimierungsproblem, das auf der Minimierung der Kupferverluste VK basiert, ist beispielsweise in der bereits erwähnten EP 4 213 368 A1 erläutert, siehe das dortige Optimierungsproblem 1. Dieses strombezogene Optimierungsproblem ist in FIG 5 dargestellt. Die Art und Weise, wie dieses Optimierungsproblem gelöst werden kann, ist ausführlich in der EP 4 213 368 A1 erläutert.

Im einfachsten Fall löst der Sollwertermittler 9 das strombezogene Optimierungsproblem ohne die Beachtung von Maximalwerten Iemax, Immax für den Erregerstrom Ie und den Motorstrom Im. In diesem Fall ergibt sich der Sollwert I* für den Stromvektor I zu

$$I^* = \sqrt{M^*} \cdot c\,. \tag{19}$$

In Gleichung 19 ist

$$c = \begin{bmatrix} cd \\ cq \\ ce \end{bmatrix} \tag{20}$$

ein systemabhängiger Parametervektor. Er ist durch die Widerstände RS und Re und die Induktivitäten Ld, Lq, Le und Lm der Motorwicklung 3 und der Erregerwicklung 6 und die Polpaarzahl Zp der Motorwicklung 3 bestimmt. Der Sachverhalt ist Fachleuten allgemein bekannt.

Die zeitliche Änderung dI*/dt des Sollwertes I* für den Stromvektor I, die der Sollwertermittler 9 im Schritt S22 ermittelt, ergibt sich in diesem Fall zu

$$\frac{dI^*}{dt} = \frac{1}{2} \cdot \frac{c}{\sqrt{M^*}} \cdot \frac{dM^*}{dt}\,. \tag{21}$$

Die vorstehend erläuterten Sachverhalte für den Sollwert I* für den Stromvektor I und dessen zeitliche Änderung dI*/dt gelten auch, wenn der Sollwertermittler 9 den Sollwert I* für den Stromvektor I im Schritt S21 zwar ohne Beachtung der Maximalwerte Iemax, Immax ermittelt, der Sollwert I* aber die Maximalwerte Iemax, Immax einhält.

Oftmals sind dem Sollwertermittler 9 die entsprechenden Maximalwerte Iemax, Immax jedoch bekannt. Beispielsweise können sie dem Sollwertermittler 9 gemäß FIG 1 im Rahmen einer vorab ausgeführten Parametrierung vorgegeben werden. Wenn dem Sollwertermittler 9 die Maximalwerte Iemax, Immax bekannt sind, ist der Sollwertermittler 9 in der Lage, die Maximalwerte Iemax, Immax im Rahmen der Ermittlung des Sollwertes I* für den Stromvektor I zu beachten. Die entsprechende Vorgehensweise ist ebenfalls in der bereits erwähnten EP 4 213 368 A1 erläutert.

In dem Fall, dass der Motorstrom Im, wenn er bei einer Ermittlung ohne Berücksichtigung der Maximalwerte Iemax, Immax seinen Maximalwert Immax verletzt und daher das strombezogene Optimierungsproblem erneut, diesmal aber unter Begrenzung des Motorstroms Im auf seinen Maximalwert Immax, gelöst wird, ergibt sich der Sollwert I* für den Stromvektor I durch die Beziehungen

$$I^* = f(M^*, x) \tag{22}$$

und

$$x^3 + a2 \cdot M^{*2} \cdot x^2 + a1 \cdot M^{*2} \cdot x + a0 \cdot M^{*2} = 0 \tag{23}$$

und die zeitliche Änderung dI*/dt des Sollwertes I* für den Stromvektor I durch die Beziehung

$$\frac{dI^*}{dt} = \left( \frac{\partial f}{\partial M^*} + \frac{\partial f}{\partial x} \cdot \frac{\partial x}{\partial M^*} \right) \cdot \frac{dM^*}{dt}\,. \tag{24}$$

f ist hierbei ein Vektor, der sich beispielsweise durch den entsprechenden Lagrange-Ansatz ergibt, vergleiche die entsprechenden Ausführungen in der EP 4 213 368 A1. Durch den Lagrange-Ansatz sind auch die Koeffizienten a2, a1 und a0 bestimmt. Gleichung 23 weist zwar mehrere Lösungen auf, aber nur eine der Lösungen ist reell. Diese Lösung ist die physikalisch sinnvolle Lösung.

In dem Fall, dass der Erregerstrom Ie, wenn er bei einer Ermittlung ohne Berücksichtigung der Maximalwerte Iemax, Immax seinen Maximalwert Iemax verletzt und daher das strombezogene Optimierungsproblem erneut, diesmal aber unter Begrenzung des Erregerstrom Ie auf seinen Maximalwert Iemax, gelöst wird, ergibt sich der Sollwert I* durch die Beziehungen

$$I^* = f(x) \cdot M^* \tag{25}$$

und

$$x^4 + b2 \cdot x^2 + \frac{b1}{M^*} \cdot x + b0 = 0 \tag{26}$$

und die zeitliche Änderung dI*/dt des Sollwertes I* für den Stromvektor I durch die Beziehung

$$\frac{dI^*}{dt} = \left( f(x(M^*)) + \frac{\partial f}{\partial x} \cdot \frac{\partial x}{\partial M^*} \right) \cdot \frac{dM^*}{dt}. \tag{27}$$

f ist hierbei ein Vektor, der aus der Literatur bekannt ist, vergleiche wieder die entsprechenden Ausführungen in der EP 4 213 368 A1. Durch diese Lösung sind auch die Koeffizienten b2, b1 und b0 bestimmt.

Schließlich kann noch der Fall auftreten, dass das strombezogene Optimierungsproblem erneut gelöst werden muss, wobei das strombezogene Optimierungsproblem diesmal unter Begrenzung sowohl des Motorstroms Im auf seinen Maximalwert Immax als auch des Erregerstrom Ie auf seinen Maximalwert Iemax gelöst wird. In diesem Fall ist das maximale Moment Mmax erreicht.

In der EP 4 213 368 A1 wird im Rahmen des Lösens des strombezogenen Optimierungsproblems weiterhin auch der Fall betrachtet, dass die Spannungsbegrenzung

$$Ud^2 + Uq^2 \leq Um\max^2 \tag{28}$$

wirksam ist. Dies ist auch im Rahmen der vorliegenden Erfindung möglich. Es ist jedoch üblicherweise nicht erforderlich, da die Spannungsbegrenzung vorzugsweise später beachtet wird, nämlich bei der Ermittlung des Sollwertes U* für den Spannungsvektor U im Schritt S23.

In der EP 4 213 368 A1 wird im Rahmen des Lösens des strombezogenen Optimierungsproblems weiterhin auch der Fall betrachtet, dass eine Feldschwächung aktiv wird, dass Sollmoment M* also nicht erreicht werden kann. In diesem Fall wird auch im Rahmen der vorliegenden Erfindung das in der EP 4 213 368 A1 als Optimierungsproblem 2 bezeichnete strombezogene Optimierungsproblem gelöst. Diese Vorgehensweise ist als solche nicht Gegenstand der vorliegenden Erfindung.

Zum Ermitteln des Sollwertes U* für den Spannungsvektor U (Schritt S23 von FIG 4) setzt der Sollwertermittler 9 vorzugsweise ein spannungsbezogenes Optimierungsproblem an und löst das spannungsbezogene Optimierungsproblem in Echtzeit. In das spannungsbezogene Optimierungsproblem gehen die Stromsollwerte I* und die zeitlichen Änderungen dI*/dt der Stromsollwerte I* als Eingangsgrößen ein. Als Ausgangsgrößen liefert das spannungsbezogene Optimierungsproblem die Spannungssollwerte U*. Zur Darlegung des spannungsbezogenen Optimierungsproblems erscheinen der Anmelderin vorab wieder einige prinzipielle Ausführungen sachdienlich zu sein.

Aufgrund der Gleichungen 10 bis 12 gilt die Beziehung

$$U^* = L \cdot \left( \frac{dI^*}{dt} - T(I - I^*) + L^{-1} \cdot R \cdot I + L^{-1} \cdot \omega \cdot LR \cdot I \right). \tag{29}$$

Hierbei ist

$$T = \begin{bmatrix} Td & 0 & 0 \\ 0 & Tq & 0 \\ 0 & 0 & Te \end{bmatrix} \qquad (30)$$

eine Diagonalmatrix mit prinzipiell frei wählbaren Zeitkonstanten Td, Tq, Te.

Gleichung 29 kann - bei entsprechender Festlegung der Vektorfunktion k - in die Form

$$U^* = k\left(I, \omega, I^*, \frac{dI^*}{dt}\right) \qquad (31)$$

gebracht werden. Dadurch ergibt sich die Beziehung

$$\frac{dI}{dt} = \frac{dI^*}{dt} - T^{-1} \cdot (I - I^*). \qquad (32)$$

Mit Einführung des Folgefehlers e:= I-I* ergibt sich somit die Beziehung

$$\frac{de}{dt} = -T^{-1} \cdot e. \qquad (33)$$

Somit ist leicht zu erkennen, dass das Regelgesetz gemäß Gleichung 29 zu einer Linearisierung des Sollwertes U* führt. Aufgrund von Gleichung 33 ist weiterhin leicht zu erkennen, dass die Regelung asymptotisch stabil ist, sofern die frei wählbaren Zeitkonstanten Td, Tq, Te positive Werte aufweisen.

Wären die Motorspannung Um und die Erregerspannung Ue nicht begrenzt, könnte der Sollwert U* für den Spannungsvektor U durch Einsetzen in Gleichung 29 direkt ermittelt werden. In der Praxis sind die Motorspannung Um und die Erregerspannung Ue jedoch durch die Maximalwerte Ummax, Uemax für die Beträge der Motorspannung Um und der Erregerspannung Ue begrenzt. Diese Begrenzungen muss der Sollwertermittler 9 bei der Ermittlung des Sollwertes U* für den Spannungsvektor U beachten. Die Maximalwerte Ummax, Uemax selbst können dem Sollwertermittler 9 gemäß FIG 1 im Rahmen einer vorab ausgeführten Parametrierung vorgegeben werden.

Nachstehend wird in Verbindung mit FIG 6 eine derzeit bevorzugte Vorgehensweise erläutert, welche einerseits die Maximalwerte Ummax, Uemax beachtet und andererseits die Ermittlung eines optimalen Sollwertes U* für den Spannungsvektor U gewährleistet.

Im Rahmen der Vorgehensweise von FIG 5 ermittelt der Sollwertermittler 9 zunächst in einem Schritt S31 gemäß der Beziehung von Gleichung 29 einen Spannungsvektor UA. Die Ermittlung des Schrittes S31 erfolgt ohne Berücksichtigung der Maximalwerte Uemax, Ummax für die Beträge der Erregerspannung Ue und der Motorspannung Um. Soweit es - isoliert betrachtet - den Schritt S31 betrifft, ist das Lösen des spannungsbezogenen Optimierungsproblems somit trivial.

In einem Schritt S32 prüft der Sollwertermittler 9, ob der Stromvektor UA die Maximalwerte Uemax, Ummax für die Beträge der Erregerspannung Ue und der Motorspannung Um einhält. Wenn dies der Fall ist, ist die Ermittlung des Sollwertes U* für den Spannungsvektor U bereits abgeschlossen. Es ist nur noch erforderlich, dass der Sollwertermittler 9 in einem Schritt S33 den Sollwert U* für den Spannungsvektor U auf den Wert UA setzt. Anderenfalls geht der Sollwertermittler 9 zu einem Schritt S34 über.

Im Schritt S34 ermittelt der Sollwertermittler 9 einen Spannungsvektor UB. Der Spannungsvektor UB setzt sich zusammen als Summe des im Schritt S31 ermittelten Spannungsvektors UA und eines Differenzvektors ΔU. Sodann löst der Sollwertermittler 9 in einem Schritt S35 das "echte" spannungsbezogene Optimierungsproblem. Das Wort "echte" wurde in diesem Fall dazu gesetzt, weil nunmehr keine triviale Lösung mehr möglich ist, sondern wirklich das spannungsbezogene Optimierungsproblem gelöst werden muss.

Im Schritt S35 ermittelt der Sollwertermittler 9 den optimalen Differenzvektor ΔU. Der Sollwertermittler 9 ermittelt den optimalen Differenzvektor ΔU dadurch, dass er gemäß einer Normvorschrift über alle Differenzvektoren ΔU das Minimum einer von dem jeweiligen Differenzvektor ΔU abhängigen Norm bestimmt und denjenigen Wert des Differenzvektors ΔU, bei dem die Norm ihr Minimum erreicht, als Stromvektor UB verwertet:

$$\min_{\Delta U} \|\Delta u\|_Q. \qquad (34)$$

In die Norm geht eine gewichtete Summe der Quadrate der Komponenten des jeweiligen Differenzvektors ΔU ein. Die Gewichtung ist vorzugsweise durch eine Matrix Q bestimmt, die ihrerseits durch die Induktivitätsmatrix L bestimmt ist, im Ergebnis also durch die Induktivitäten Ld, Lq, Le und Lm der Erregerwicklung 6 und der Motorwicklung 3. Im Ergebnis wird die jeweilige Norm somit gemäß der Beziehung

$$\left\|\Delta u\right\|_Q = \Delta u^T \cdot Q \cdot \Delta u \qquad (35)$$

ermittelt, wobei die Matrix Q zu

$$Q = \left(L^{-1}\right)^T \cdot L^{-1} \qquad (36)$$

bestimmt ist.
gemäß einer von den Induktivitäten der Erregerwicklung und der Motorwicklung abhängigen Normvorschrift

Im Rahmen des Variierens des Differenzvektors ΔU beachtet der Sollwertermittler 9 die Nebenbedingung, dass der Spannungsvektor UB, also die Summe des Spannungsvektors UA und des Differenzvektors ΔU, die Beschränkungen gemäß der Maximalwerte Ummax, Uemax einhält, im Ergebnis also Gleichung 13.

In einem Schritt S36 setzt der Sollwertermittler 9 schließlich den Sollwert U* für den Spannungsvektor U auf den Wert UA + ΔU. Im Rahmen des Schrittes S36 wird - selbstverständlich - der im Schritt S35 ermittelte optimale Wert für den Differenzvektor ΔU verwendet.

Im Rahmen des Schrittes S35, also beim Lösen des spannungsbezogenen Optimierungsproblems, beachtet der Sollwertermittler 9 zum einen die Grundvoraussetzung für die Bestimmung des Differenzvektors ΔU, also die Beziehung U = UA + ΔU. Weiterhin beachtet der Sollwertermittler 9 die Spannungsbeschränkung gemäß Gleichung 13. Die Norm, deren Wert ermittelt wird, ist vorzugsweise wieder durch die vorstehend erläuterte Matrix Q bestimmt. Der Schritt S35 wird nachstehend in Verbindung mit den FIG 7 und 8 näher erläutert.

Gemäß FIG 7 ermittelt der Sollwertermittler 9 zur Lösung des spannungsbezogenen Optimierungsproblems zunächst in einem Schritt S41 in dem feldorientierten Koordinatensystem (dqe-System, siehe FIG 8) obere und untere Ecken EO und EU eines regulären Prismas. Von den oberen und unteren Ecken EO und EU sind in FIG 8 nur einige mit ihrem Bezugszeichen versehen.

Die oberen Ecken EO sind diejenigen Ecken des Prismas, bei denen die Erregerspannung Ue ihren Maximalwert Uemax aufweist. Ebenso sind die unteren Ecken EU diejenigen Ecken des Prismas, bei denen die Erregerspannung Ue ihren Minimalwert -Uemax aufweist. Die genaue Lage der oberen und unteren Ecken EO und EU sind durch den Maximalwert Ummax für den Betrag der Motorspannung Um und den aktuellen elektrischen Rotorwinkel θ bestimmt. Die oberen und unteren Ecken EO und EU, im Ergebnis also das von dem Prisma umschlossene Gebiet, ist somit durch die Maximalwerte Uemax, Ummax für die Beträge der Erregerspannung Ue und der Motorspannung Um und die aktuelle (elektrische) Drehstellung des Rotors 5 relativ zum Stator 2 bestimmt.

Entlang der Verbindungslinie von einer jeweiligen oberen Ecke EO zur korrespondierenden unteren Ecke EU variiert die Erregerspannung UE zwischen ihrem Minimalwert -Uemax und ihrem Maximalwert Uemax. Die feldorientierten Komponenten Ud, Uq der Motorspannung Um variieren entlang der jeweiligen Linie nicht. Umgekehrt weist entlang einer Verbindungslinie zwischen benachbarten oberen Ecken EO die Erregerspannung Ue konstant ihren Maximalwert Uemax auf, während die feldorientierten Komponenten Ud, Uq der Motorspannung Um entlang der Spannungsbegrenzung durch den Maximalwert Ummax der Motorspannung Um variieren. Weiterhin weist entlang einer Verbindungslinie zwischen benachbarten unteren Ecken EU die Erregerspannung Ue konstant ihren Minimalwert -Uemax auf, während die feldorientierten Komponenten Ud, Uq der Motorspannung Um entlang der Spannungsbegrenzung durch den Maximalwert Ummax der Motorspannung Um variieren.

In einem Schritt S42 wählt der Sollwertermittler 9 aus den oberen Ecken EO diejenige aus, die gemäß der verwendeten Norm den geringsten Abstand zum Spannungsvektor UA aufweist. In analoger Weise wählt der Sollwertermittler 9 in einem Schritt S43 aus den oberen Ecken EO diejenige aus, die gemäß der verwendeten Norm den zweitgeringsten Abstand zum Spannungsvektor UA aufweist. Diese beiden oberen Ecken EO werden nachstehend als EO1 und EO2 bezeichnet, die beiden korrespondierenden unteren Ecken EU als EU1 und EU2.

In einem Schritt S44 ermittelt der Sollwertermittler 9 einen ersten Spannungsvektor U1. Die Ermittlung erfolgt durch Lösen des spannungsbezogenen Optimierungsproblems gemäß der Gleichungen 34 bis 36.Im Rahmen des Lösens des spannungsbezogenen Optimierungsproblems setzt der Sollwertermittler 9 jedoch die Erregerspannung Ue fest auf ihren Maximalwert Uemax. Hingegen beachtet der Sollwertermittler 9 nicht die Beschränkung des Betrages der Motorspannung Um. Der ermittelte erste Spannungsvektor U1 liegt somit in dem feldorientierten Koordinatensystem innerhalb der Ebene, die durch die Oberseite des regulären Prismas definiert ist. Der ermittelte erste Spannungsvektor U1 kann innerhalb der Oberseite des regulären Prismas selbst liegen. Dies ist aber nicht stets und unbedingt der Fall.

Gegebenenfalls kann der Sollwertermittler 9 noch einen weiteren ersten Spannungsvektor U 1' ermitteln. Der weitere erste Spannungsvektor U1' stimmt bezüglich der ermittelten Motorspannung Um mit dem ersten Spannungsvektor U1 überein, die Erregerspannung UE weist jedoch das umgekehrte Vorzeichen auf.

In einem Schritt S45 ermittelt der Sollwertermittler 9 einen zweiten Spannungsvektor U2. Die Ermittlung erfolgt wieder durch Lösen des spannungsbezogenen Optimierungsproblems der Gleichungen 34 bis 36. Im Rahmen des Lösens des spannungsbezogenen Optimierungsproblems beachtet der Sollwertermittler 9 jedoch die Randbedingung, dass die Motorspannung Um in dem feldorientierten Koordinatensystem in einer Ebene liegt, die durch die erste und die zweite ausgewählte obere Ecke EO1, EO2 des Prismas und die zugehörigen unteren Ecken EU1, EU2 des Prismas definiert ist. Hingegen berücksichtigt der Sollwertermittler 9 nicht die Beschränkung des Betrages der Erregerspannung Ue. Auch die Beschränkung der Motorspannung Um beachtet der Sollwertermittler 9 nicht. Der ermittelte zweite Spannungsvektor U2 kann innerhalb der von der ersten und der zweiten ausgewählten oberen Ecke EO1, EO2 des Prismas und den zugehörigen unteren Ecken EU1, EU2 des Prismas begrenzten Seitenfläche des regulären Prismas selbst liegen. Dies ist aber nicht stets und unbedingt der Fall.

In einem Schritt S46 ermittelt der Sollwertermittler 9 einen dritten Spannungsvektor U3. Die Ermittlung erfolgt wieder durch Lösen des spannungsbezogenen Optimierungsproblems der Gleichungen 34 bis 36. Im Rahmen des Lösens des spannungsbezogenen Optimierungsproblems beachtet der Sollwertermittler 9 jedoch die Randbedingung, dass die Motorspannung Um den Wert der ersten ausgewählten oberen Ecke EO1 des Prismas aufweist. Hingegen berücksichtigt der Sollwertermittler 9 nicht die Beschränkung des Betrages der Erregerspannung Ue. Der ermittelte dritte Spannungsvektor U3 liegt somit in dem feldorientierten Koordinatensystem auf einer Geraden, die durch die erste ausgewählte obere Ecke EO1 des Prismas und die zugehörige untere Ecke EU1 des Prismas definiert ist. Der ermittelte dritte Spannungsvektor U3 kann auf der Strecke zwischen der ersten ausgewählten oberen Ecke EO1 und der zugehörigen unteren Ecke EU1 des Prismas selbst liegen. Dies ist aber nicht stets und unbedingt der Fall.

In einem Schritt S47 ermittelt der Sollwertermittler 9 einen vierten Spannungsvektor U4. Die Ermittlung erfolgt wieder durch Lösen des spannungsbezogenen Optimierungsproblems der Gleichungen 34 bis 36. Im Rahmen des Lösens des spannungsbezogenen Optimierungsproblems beachtet der Sollwertermittler 9 jedoch die Randbedingung, dass die Motorspannung Um den Wert der zweiten ausgewählten oberen Ecke EO2 des Prismas aufweist. Hingegen berücksichtigt der Sollwertermittler 9 nicht die Beschränkung des Betrages der Erregerspannung Ue. Der ermittelte vierte Spannungsvektor U4 liegt somit in dem feldorientierten Koordinatensystem auf einer Geraden, die durch die zweite ausgewählte obere Ecke EO2 des Prismas und die zugehörige untere Ecke EU2 des Prismas definiert ist. Der ermittelte vierte Spannungsvektor U4 kann auf der Strecke zwischen der zweiten ausgewählten oberen Ecke EO2 und der zugehörigen unteren Ecke EU2 des Prismas selbst liegen. Dies ist aber nicht stets und unbedingt der Fall.

In einem Schritt S48 ermittelt der Sollwertermittler 9 einen fünften Spannungsvektor U5. Die Ermittlung erfolgt wieder durch Lösen des spannungsbezogenen Optimierungsproblems der Gleichungen 34 bis 36. Im Rahmen des Lösens des spannungsbezogenen Optimierungsproblems beachtet der Sollwertermittler 9 jedoch die Randbedingung, dass die Erregerspannung Ue ihren Maximalwert Uemax aufweist und die Motorspannung Um auf einer Geraden liegt, die durch die erste und die zweite ausgewählte obere Ecke EO1, EO2 des Prismas definiert ist. Hingegen berücksichtigt der Sollwertermittler 9 nicht die Beschränkung des Betrages der Motorspannung Um. Der ermittelte fünfte Spannungsvektor U5 liegt somit in dem feldorientierten Koordinatensystem auf einer Geraden, die durch die erste und die zweite ausgewählte obere Ecke EO1, EO2 des Prismas definiert ist. Der ermittelte fünfte Spannungsvektor U4 kann auf der Strecke zwischen der ersten und der zweiten ausgewählten oberen Ecke EO1, EO2 des Prismas selbst liegen. Dies ist aber nicht stets und unbedingt der Fall. Gegebenenfalls kann der Sollwertermittler 9 noch einen weiteren fünften Spannungsvektor U5' ermitteln. Der weitere fünfte Spannungsvektor U5' stimmt bezüglich der ermittelten Motorspannung Um mit dem fünften Spannungsvektor U5 überein, die Erregerspannung Ue weist jedoch das umgekehrte Vorzeichen auf.

In allen fünf (bzw. sieben) Fällen ermittelt der Sollwertermittler 9 somit einen jeweiligen Spannungsvektor U1 bis U5, U1', U5', der in dem feldorientierten Koordinatensystem den geringsten Abstand zu dem Spannungsvektor UA aufweist. Bei der Ermittlung des jeweiligen Spannungsvektors U1 bis U5 und gegebenenfalls auch U1', U5' berücksichtigt der Sollwertermittler 9 jedoch voneinander verschiedene Nebenbedingungen.

In einem Schritt S49 bildet der Sollwertermittler 9 eine Menge an zulässigen Spannungsvektoren. Die Menge an zulässigen Spannungsvektoren enthält zunächst die erste und die zweite ausgewählte obere Ecke EO1, EO2 des Prismas. Gegebenenfalls kann sie auch die beiden zugehörigen unteren Ecken EU1, EU2 des Prismas enthalten. Diese zwei bzw. vier Spannungsvektoren halten aufgrund ihrer Festlegung bezüglich des Betrages ihrer Erregerspannung Ue und des Betrages ihrer Motorspannung Um die Maximalwerte Uemax, Ummax ein. Weiterhin enthält diese Menge diejenigen der in den Schritten S44 bis S48 ermittelten Spannungsvektoren U1 bis U5, bei denen die Beträge der Erregerspannung Ue und der Motorspannung Um die zulässigen Maximalwerte Uemax, Ummax einhalten. Gegebenenfalls kann die Menge an zulässigen Spannungsvektoren auch die Spannungsvektoren U1' und U5' enthalten, sofern diese die Beträge der Erregerspannung Ue und der Motorspannung Um die zulässigen Maximalwerte Uemax, Ummax einhalten.

In einem Schritt S50 wählt der Sollwertermittler 9 aus der im Schritt S49 gebildeten Menge an zulässigen Spannungsvektoren denjenigen aus, der gemäß der Norm den geringsten Abstand zum Spannungsvektor UA aufweist. Dieser Spannungsvektor ist der besuchte Spannungsvektor UB. Mit dem Schritt S50 ist die Vorgehensweise gemäß FIG 7 abgeschlossen.

Die vorliegende Erfindung weist viele Vorteile auf. Beispielsweise werden keine aufwendig aufgenommenen oder vorab berechneten Lookup-Tables benötigt. Auch werden keine kritischen Vereinfachungen vorgenommen. Dadurch kann das erfindungsgemäße Betriebsverfahren sehr schnell für neue Synchronmaschinen angepasst werden. In der Regel ist nur eine Parametrierung erforderlich. Weiterhin werden in vollem Umfang die Nichtlinearitäten und Kopplungen betrachtet und berücksichtigt. Dadurch kann eine Trajektorie für das Sollmoment vorgegeben werden, welche exakt und energieeffizient eingehalten wird. Dadurch verbessern sich das Führungsverhalten des Synchronmotors, die Energieeffizienz und die Einhaltung von Beschränkungen des Erregerstroms und des Motorstroms.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Synchronmotor |
| 2 | Stator |
| 3 | Motorwicklung |
| 4, 7 | Umrichter |
| 5 | Rotor |
| 6 | Erregerwicklung |
| 8 | Umrichtereinrichtung |
| 9 | Sollwertermittler |
| 10 | Computerprogramm |
| 11 | Maschinencode |
| 12 | Eingänge |
| 13 | Umrechnungseinrichtung |

| | |
|---|---|
| EO, EO1, EO2 | obere Ecken |
| EU, EU1, EU2 | untere Ecken |
| Imax, Immax, Iemax | Maximalwerte für Ströme |
| I, Ie, Im | Ströme |
| I* | Stromsollwerte |
| M* | Sollmoment |
| Mmax | Maximalwert für Moment |
| S1 bis S50 | Schritte |
| Umax, Ummax, Uemax | Maximalwerte für Spannungen |
| Ue*, Um* | Sollwerte für Spannungen |
| UA, UB, U1 bis U5, U1', U5' | Spannungsvektoren |
| VK | Kupferverluste |

| | |
|---|---|
| ΔU | Differenzvektor |
| ω | Drehzahl |

**Patentansprüche**

1. Betriebsverfahren für einen fremderregten Synchronmotor (1), der einen Stator (2), einen Rotor (5), eine Erregerwicklung (6) und eine Motorwicklung (3) aufweist,

   - wobei ein Sollwertermittler (9) eine momentane Drehzahl (ω) des Rotors (5) relativ zum Stator (2), ein von dem Synchronmotor (1) aufzubringendes Sollmoment (M*), eine zeitliche Änderung des Sollmoments (M*) und Stromistwerte (Iemax, Immax) für einen in der Erregerwicklung (6) fließenden Erregerstrom (Ie) und einen in der Motorwicklung (3) fließenden Motorstrom (Im) entgegennimmt,
   - wobei der Sollwertermittler (9) in Abhängigkeit von der Drehzahl (ω), dem Sollmoment (M*), der zeitlichen Änderung des Sollmoments (M*) und der Stromistwerte (Iemax, Immax) Spannungssollwerte (Ue*, Um*) für eine

den Erregerstrom (Ie) treibende Erregerspannung (Ue) und eine den Motorstrom (Im) treibende Motorspannung (Um) ermittelt, so dass der Synchronmotor (1) so weit wie möglich ein mit dem Sollmoment (M*) korrespondierendes Istmoment (M) aufbringt und das Istmoment (M) sich so weit wie möglich entsprechend der zeitlichen Änderung des Sollmoments (M*) ändert,
- wobei der Sollwertermittler (9) eine mit der Erregerwicklung (6) und der Motorwicklung (3) verbundene Umrichtereinrichtung (8) entsprechend der ermittelten Spannungssollwerte (Ue*, Um*) ansteuert, so dass die Umrichtereinrichtung (8) mit den ermittelten Spannungssollwerten (Ue*, Um*) korrespondierende Spannungen (Ue, Um) an die Erregerwicklung (6) und die Motorwicklung (3) anlegt.

**2.** Betriebsverfahren nach Anspruch 1,
**dadurch gekennzeichnet,**

- **dass** der Sollwertermittler (9) in Abhängigkeit von der Drehzahl ($\omega$) und dem Sollmoment (M*) Stromsollwerte (I*) für den Erregerstrom (Ie) und den Motorstrom (Im) ermittelt, so dass der Synchronmotor (1) so weit wie möglich das mit dem Sollmoment (M*) korrespondierende Istmoment (M) aufbringt,
- **dass** der Sollwertermittler (9) weiterhin zeitliche Änderungen der Stromsollwerte (I*) ermittelt, so dass das Istmoment (M) sich so weit wie möglich entsprechend der zeitlichen Änderung des Sollmoments (M*) ändert, und
- **dass** der Sollwertermittler (9) sodann anhand der Stromsollwerte (I*), der zeitlichen Änderungen der Stromsollwerte (I*), der Drehzahl ($\omega$) und der Stromistwerte (Ie, Im) die Spannungssollwerte (Ue*, Um*) ermittelt.

**3.** Betriebsverfahren nach Anspruch 2,
**dadurch gekennzeichnet,**
**dass** der Sollwertermittler (9) die Stromsollwerte (I*) ohne Berücksichtigung der zeitlichen Änderung des Sollmoments (M*) ermittelt und die zeitliche Änderung der Stromsollwerte (I*) unter Berücksichtigung des Sollmoments (M*) und der zeitlichen Änderung des Sollmoments (M*) ermittelt.

**4.** Betriebsverfahren nach Anspruch 2 oder 3,
**dadurch gekennzeichnet,**
**dass** der Sollwertermittler (9) zum Ermitteln der Stromsollwerte (I*) ein strombezogenes Optimierungsproblem ansetzt und in Echtzeit löst.

**5.** Betriebsverfahren nach Anspruch 2, 3 oder 4,
**dadurch gekennzeichnet,**
**dass** der Sollwertermittler (9) die Stromsollwerte (I*) derart ermittelt, dass durch den Erregerstrom (Ie) und den Motorstrom (Im) hervorgerufene Kupferverluste (VK) in der Erregerwicklung (6) und der Motorwicklung (3) minimiert werden.

**6.** Betriebsverfahren nach einem der Ansprüche 2 bis 5,
**dadurch gekennzeichnet,**
**dass** dem Sollwertermittler (9) Maximalwerte (Iemax, Immax) für die Beträge des Erregerstroms (Ie) und des Motorstroms (Im) bekannt sind und dass der Sollwertermittler (9) die Maximalwerte (Iemax, Immax) für die Beträge des Erregerstroms (Ie) und des Motorstroms (Im) im Rahmen der Ermittlung der Stromsollwerte (I*) beachtet.

**7.** Betriebsverfahren nach einem der Ansprüche 2 bis 6,
**dadurch gekennzeichnet,**
**dass** der Sollwertermittler (9) zum Ermitteln der Spannungssollwerte (Ue*, Um*) ein spannungsbezogenes Optimierungsproblem ansetzt, in das die Stromsollwerte (I*) und die zeitlichen Änderungen der Stromsollwerte (I*) als Eingangsgrößen eingehen und das als Ausgangsgrö-ßen die Spannungssollwerte (Ue*, Um*) liefert, und das spannungsbezogene Optimierungsproblem in Echtzeit löst.

**8.** Betriebsverfahren nach Anspruch 7,
**dadurch gekennzeichnet,**
**dass** dem Sollwertermittler (9) Maximalwerte (Uemax, Ummax) für die Beträge der Erregerspannung (Ue) und der Motorspannung (Um) bekannt sind und dass der Sollwertermittler (9) die Maximalwerte (Uemax, Ummax) für die Erregerspannung (Ue) und die Motorspannung (Um) im Rahmen des Lösens des Optimierungsproblems beachtet.

**9.** Betriebsverfahren nach Anspruch 8,
**dadurch gekennzeichnet,**

**dass** der Sollwertermittler (9) Rahmen des Lösens des spannungsbezogenen Optimierungsproblems

- das spannungsbezogene Optimierungsproblem zunächst ohne Berücksichtigung der Maximalwerte (Uemax, Ummax) für die Beträge der Erregerspannung und der Motorspannung löst und so vorläufige Spannungssollwerte (UA) ermittelt,
- sodann prüft, ob die vorläufigen Spannungssollwerte (UA) die Maximalwerte (Uemax, Ummax) für die Beträge der Erregerspannung (Ue) und der Motorspannung (Um) einhalten,
- bejahendenfalls die vorläufigen Spannungssollwerte (UA) als Spannungssollwerte (Ue*, Um*) für die Erregerspannung (Ue) und die Motorspannung (Um) übernimmt und
- verneinendenfalls folgende Schritte ausführt:

  -- Ermittlung von oberen und unteren Ecken (EO, EU) eines regulären Prismas in einem feldorientierten Koordinatensystem, wobei das von dem Prisma umschlossene Gebiet durch die Maximalwerte (Uemax, Ummax) für die Beträge der Erregerspannung (Ue) und der Motorspannung (Um) und eine aktuelle Drehstellung des Rotors (5) relativ zum Stator (2) bestimmt ist,
  -- Auswahl einer ersten oberen Ecke (EO1) des Prismas, bei welcher die Erregerspannung (Ue) ihren Maximalwert (Uemax) aufweist und die in dem feldorientierten Koordinatensystem gemäß einer Normvorschrift den geringsten Abstand zu den vorläufigen Spannungssollwerten (UA) aufweist,
  -- Auswahl einer zweiten oberen Ecke (EO2) des Prismas, wobei die zweite ausgewählte Ecke (EO2) eine von der ersten ausgewählten Ecke (EO1) verschiedene Ecke ist, bei welcher die Erregerspannung (Ue) ihren Maximalwert (Uemax) aufweist und die in dem feldorientierten Koordinatensystem nach der ersten ausgewählten Ecke (EO1) gemäß der Normvorschrift den geringsten Abstand zu den vorläufigen Spannungssollwerten (UA) aufweist,
  -- Ermittlung eines ersten bis fünften Spannungsvektors (U1 bis U5), die jeweils in dem feldorientierten Koordinatensystem den geringsten Abstand zu den vorläufigen Spannungssollwerten (UA) aufweisen,

    --- wobei bei der Ermittlung des ersten Spannungsvektors (U1) der Betrag der Erregerspannung (Ue) fest auf seinen Maximalwert (Uemax) gesetzt wird, die Beschränkung des Betrages der Motorspannung (Um) aber nicht berücksichtigt wird,
    --- wobei bei der Ermittlung des zweiten Spannungsvektors (U2) die Motorspannung (Um) in dem feldorientierten Koordinatensystem in einer Ebene liegt, die durch die erste und die zweite ausgewählte obere Ecke (EO1, EO2) des Prismas und die zugehörigen unteren Ecken (EU1, EU2) des Prismas definiert ist, die Beschränkung des Betrages der Erregerspannung (Ue) und die Beschränkung des Betrages der Motorspannung (Um) aber nicht berücksichtigt werden,
    --- wobei bei der Ermittlung des dritten Spannungsvektors (U3) berücksichtigt wird, dass die Motorspannung (Um) den Wert der ersten ausgewählten oberen Ecke (EO1) des Prismas aufweist, die Beschränkung des Betrages der Erregerspannung (Ue) aber nicht berücksichtigt wird,
    --- wobei bei der Ermittlung des vierten Spannungsvektors (U4) berücksichtigt wird, dass die Motorspannung (Um) den Wert der zweiten ausgewählten oberen Ecke (EO1) des Prismas aufweist, die Beschränkung des Betrages der Erregerspannung (Ue) aber nicht berücksichtigt wird, und
    --- wobei bei der Ermittlung des fünften Spannungsvektors (U5) berücksichtigt wird, dass der Betrag der Erregerspannung (Ue) seinen Maximalwert (Uemax) aufweist und die Motorspannung (Um) auf einer Geraden liegt, die durch die erste und die zweite ausgewählte obere Ecke (EO1, EO2) des Prismas definiert ist, die Beschränkung des Betrages der Motorspannung (Um) aber nicht berücksichtigt wird,

  -- Herausgreifen desjenigen Spannungsvektors aus einer Menge von Spannungsvektoren, welche den ersten bis fünften Spannungsvektor (1 bis U5, die erste und die zweite ausgewählte obere Ecke (EO1, EO2) und optional die beiden die zugehörigen unteren Ecken (EU1, EU2) des Prismas enthält, bei dem die Beträge der Erregerspannung (Ue) und der Motorspannung (Um) die Maximalwerte (Uemax, Ummax) für die Beträge der Erregerspannung (Ue) und die Motorspannung (Um) einhalten und der in dem feldorientierten Koordinatensystem gemäß der Normvorschrift den geringsten Abstand zu den vorläufigen Spannungssollwerten (UA) aufweist, und
  -- Übernehmen des herausgegriffenen Spannungsvektors als Spannungssollwerte (Ue*, Um*) für die Erregerspannung (Ue) und die Motorspannung (Um).

**10.** Betriebsverfahren nach Anspruch 9,
**dadurch gekennzeichnet,**
**dass** die Normvorschrift von den Induktivitäten der Erregerwicklung (6) und der Motorwicklung (3) abhängt.

**11.** Betriebsverfahren nach der Ansprüche 1 bis 5,
**dadurch gekennzeichnet,**
**dass** dem Sollwertermittler (9) Maximalwerte (Iemax, Uemax, Immax, Ummax) für die Beträge des Erregerstroms (Ie), der Erregerspannung (Ue), des Motorstroms (Im) und der Motorspannung (Um) bekannt sind und dass der Sollwertermittler (9) die Maximalwerte (Iemax, Uemax, Immax, Ummax) im Rahmen der Ermittlung der Spannungssollwerte (Ue*, Um*) beachtet.

**12.** Betriebsverfahren nach einem der obigen Ansprüche,
**dadurch gekennzeichnet,**
**dass** der Sollwertermittler (9) prüft, ob der Betrag des aufzubringenden Sollmoments (M*) einen vorbestimmten Maximalwert (Mmax) einhält, bejahendenfalls das aufzubringende Sollmoment (M*) und die zeitliche Änderung des Sollmoments (M*) ohne Modifikation verwertet und verneinendenfalls den Betrag des aufzubringenden Sollmoments (M*) auf den Maximalwert (Mmax) begrenzt und die zeitliche Änderung des Sollmoments (M*) auf 0 setzt.

**13.** Computerprogramm für einen Sollwertermittler (9), wobei das Computerprogramm Maschinencode (11) umfasst, der von dem Sollwertermittler (9) abarbeitbar ist, wobei die Abarbeitung des Maschinencodes (11) durch den Sollwertermittler (9) bewirkt, dass der Sollwertermittler (9) ein Betriebsverfahren nach einem der obigen Ansprüche ausführt.

**14.** Sollwertermittler zum Ermitteln von Spannungssollwerten (Ue*, Um*) für eine Erregerspannung (Ue) und eine Motorspannung (Um) eines fremderregten Synchronmotors (1), wobei der Sollwertermittler (9) Eingänge (12) zum Entgegennehmen einer momentanen Drehzahl ($\omega$) des Rotors (5) relativ zum Stator (2), eines von dem Synchronmotor (1) aufzubringenden Sollmoments (M*), einer zeitlichen Änderung des Sollmoments (M*) und von Stromistwerten (Ie, Im) für einen in der Erregerwicklung (6) fließenden Erregerstrom (Ie) und einen in der Motorwicklung (3) fließenden Motorstrom (Im) aufweist und mit einem Computerprogramm (10) nach Anspruch 13 programmiert ist, so dass er im Betrieb ein Betriebsverfahren nach einem der Ansprüche 1 bis 12 ausführt.

**15.** Antrieb,

- wobei der Antrieb einen fremderregten Synchronmotor (1) mit einem Stator (2), einem Rotor (5), einer Erregerwicklung (6) und einer Motorwicklung (3) aufweist,
- wobei der Antrieb eine Umrichtereinrichtung (8) aufweist, die zum Anlegen einer Erregerspannung (Ue) und zum Zuführen eines Erregerstroms (Ie) mit der Erregerwicklung (6) verbunden ist und zum Anlegen einer Motorspannung (Um) und zum Zuführen eines Motorstroms (Im) mit der Motorwicklung (3) verbunden ist,
- wobei der Antrieb einen Sollwertermittler (9) nach Anspruch 14 aufweist,
- wobei der Sollwertermittler (9) zum Vorgeben von Spannungssollwerten (Ue*, Um*) für die Erregerspannung (e) und die Motorspannung (Um) mit der Umrichtereinrichtung (8) verbunden ist.

FIG 1

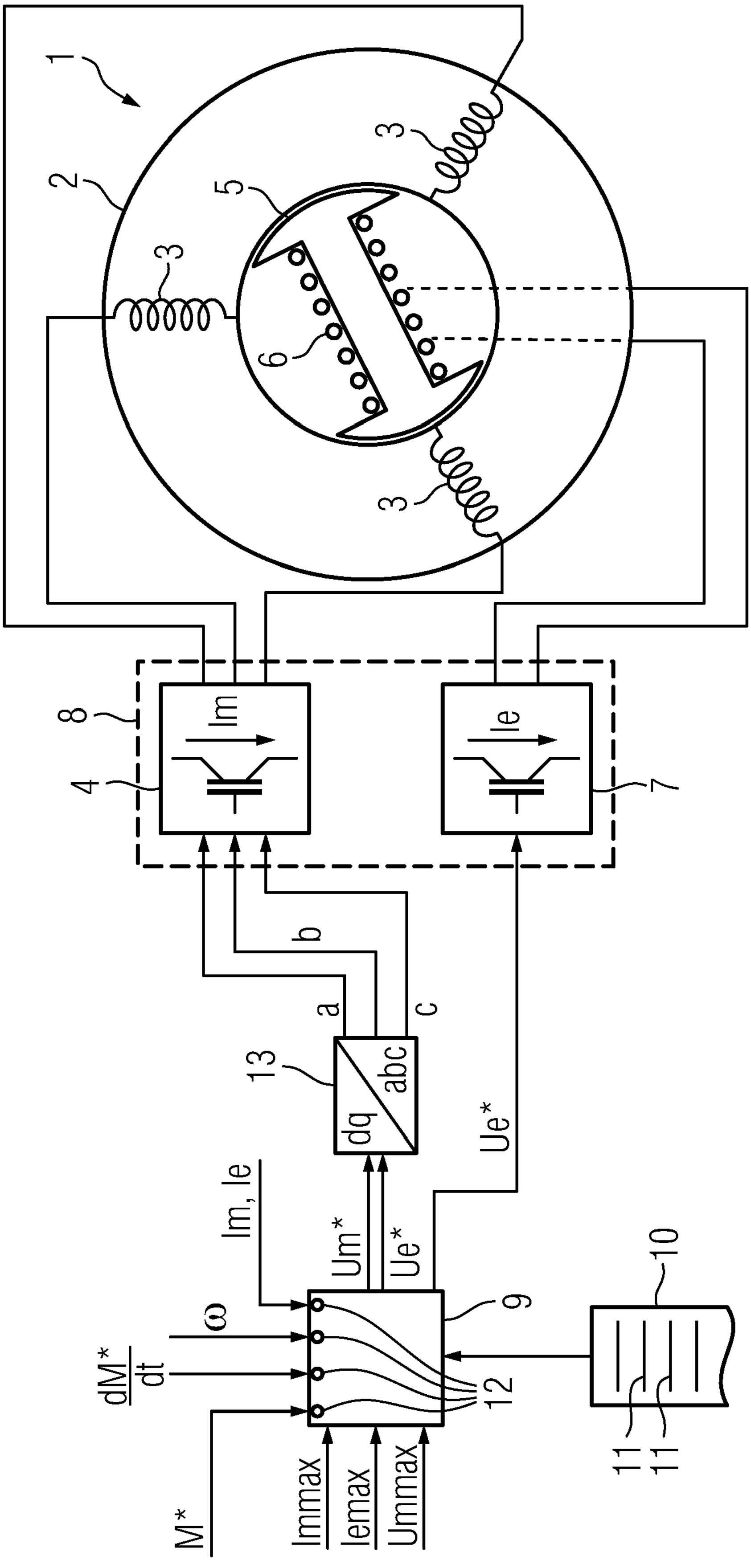
1
2
3
3
3
5
6
8
4
Im
Ie
7
a
b
c
13
dq
abc
Ue*
Im, Ie
Um*
Ue*
ω
dM*
dt
M*
Immax
Iemax
Ummax
9
12
10
11
11

FIG 2

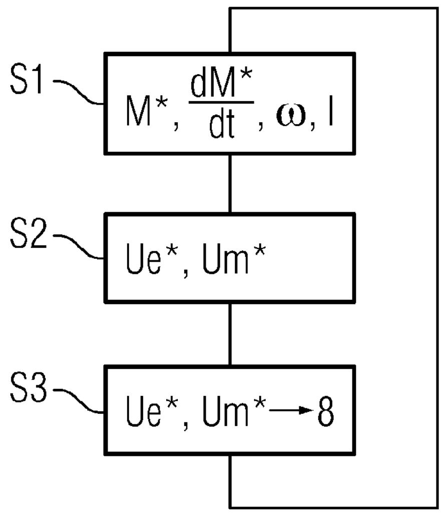
S1
M*, dM*/dt, ω, I
S2
Ue*, Um*
S3
Ue*, Um*→8

FIG 3

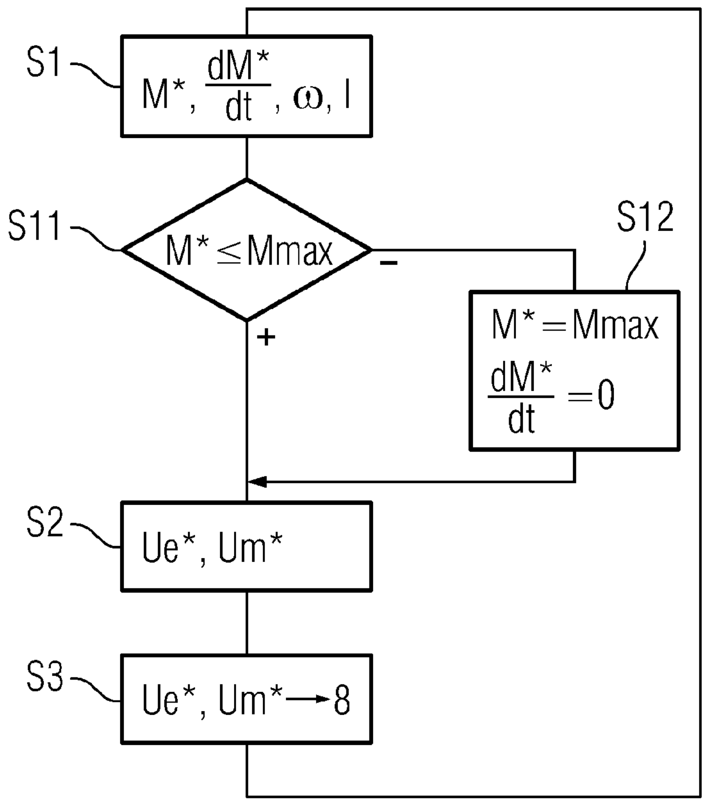
S1
M*, dM*/dt, ω, I
S11
M*≤Mmax
–
+
S12
M*=Mmax
dM*/dt =0
S2
Ue*, Um*
S3
Ue*, Um*→8

FIG 4

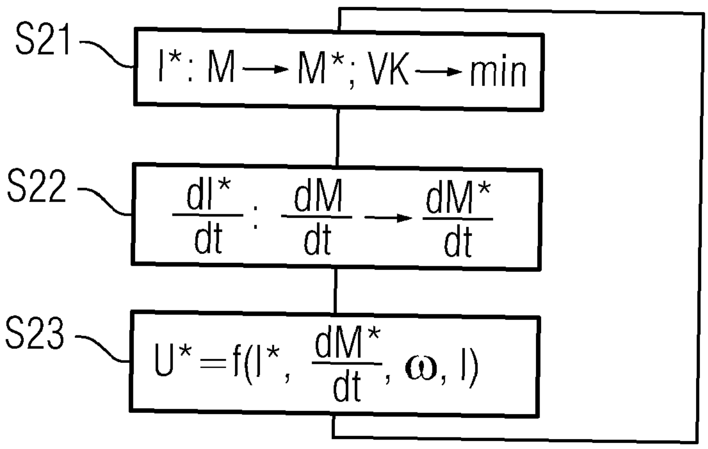
S21
I*: M → M*; VK → min
S22
dI*/dt : dM/dt → dM*/dt
S23
U* = f(I*, dM*/dt, ω, I)

FIG 5

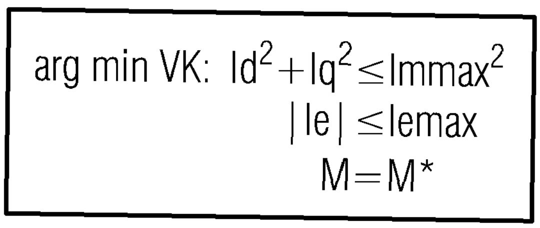
arg min VK: Id² + Iq² ≤ Immax²
|Ie| ≤ Iemax
M = M*

FIG 6

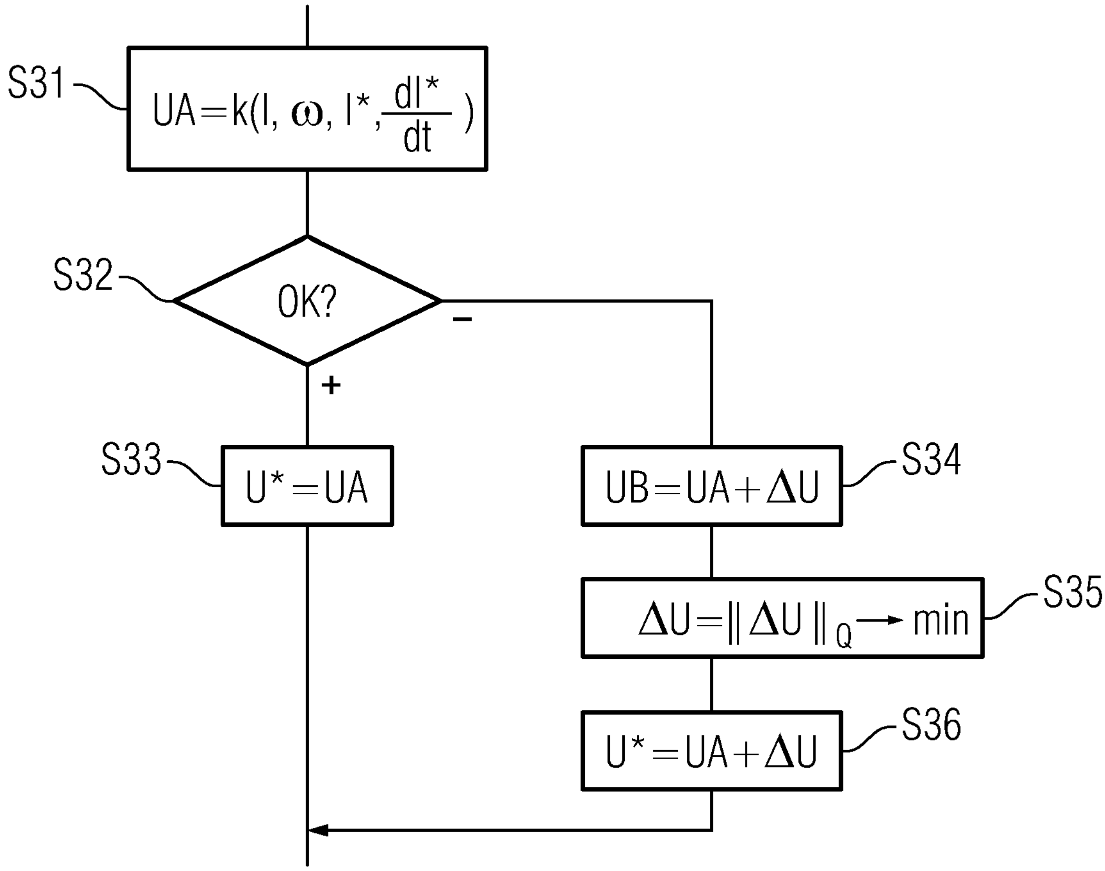
S31
UA=k(I, ω, I*, dI*/dt )
S32
OK?
–
+
S33
U*=UA
UB=UA+ΔU
S34
ΔU=‖ ΔU ‖Q→ min
S35
U*=UA+ΔU
S36

FIG 7

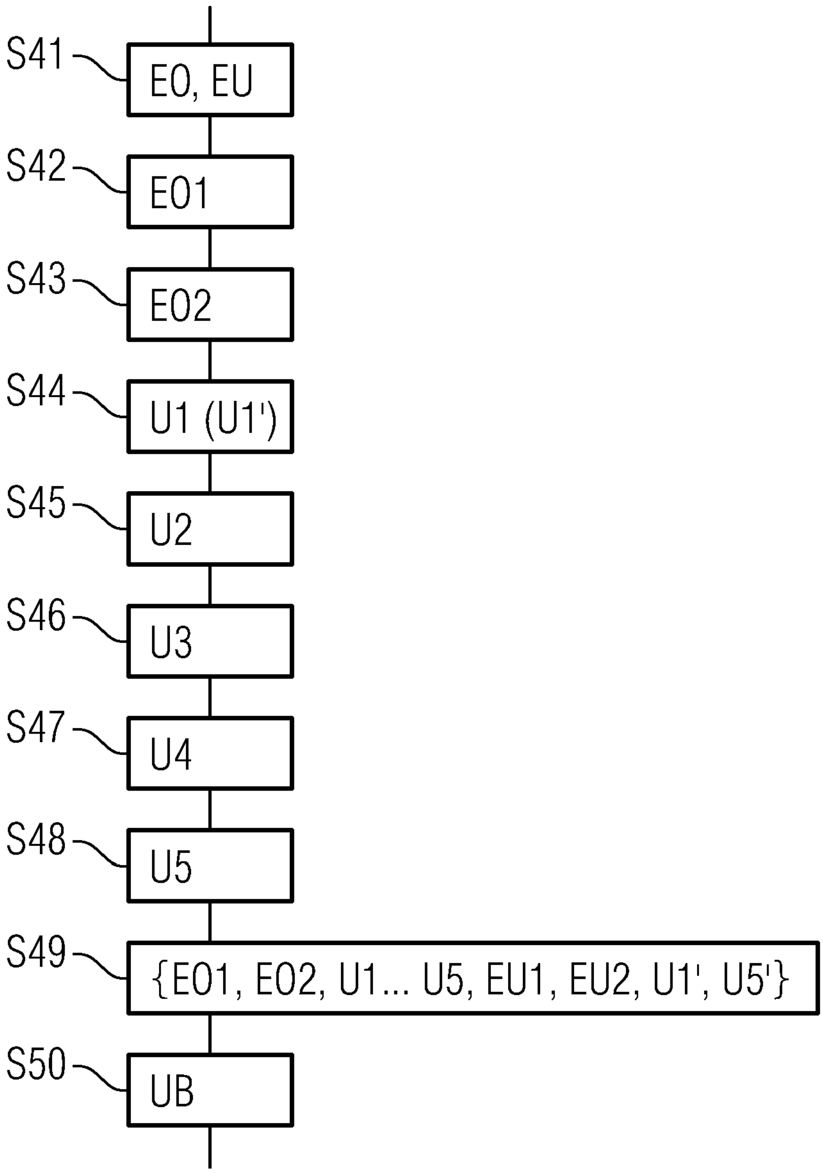
S41
E0, EU
S42
E01
S43
E02
S44
U1 (U1')
S45
U2
S46
U3
S47
U4
S48
U5
S49
{E01, E02, U1... U5, EU1, EU2, U1', U5'}
S50
UB

FIG 8

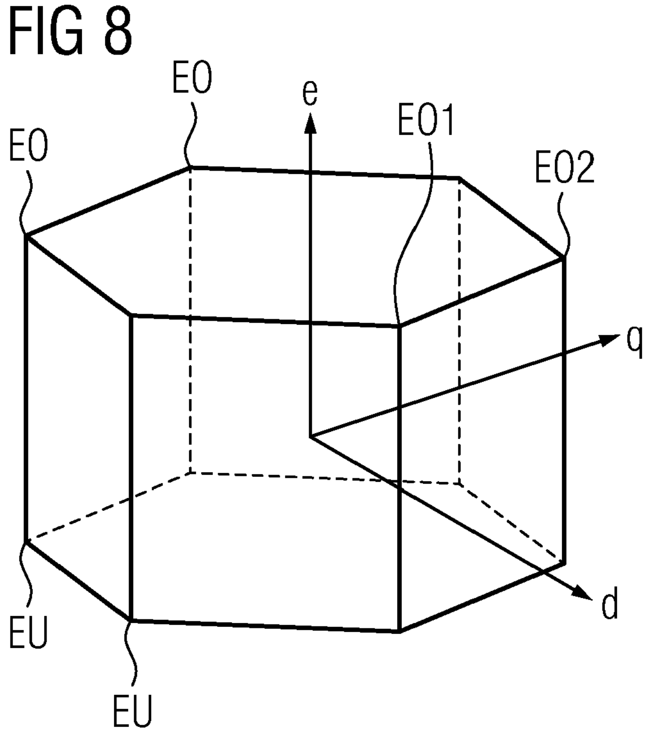

Europäisches Patentamt
European Patent Office
Office européen des brevets

# EUROPÄISCHER RECHERCHENBERICHT

Nummer der Anmeldung
EP 24 18 6418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y<br><br><br>A | EP 4 213 368 A1 (PRIMETALS TECHNOLOGIES GERMANY GMBH [DE])<br>19. Juli 2023 (2023-07-19)<br>* Absatz [0030] - Absatz [0080];<br>Abbildungen 1-5 *<br>----- | 1-8,11,<br>13-15<br><br>9,10 | INV.<br>H02P6/32<br>H02P6/34<br>H02P21/14<br>H02P21/22 |
| Y<br><br>A | US 2023/283211 A1 (CARVELL PAUL [US] ET AL) 7. September 2023 (2023-09-07)<br>* Absatz [0036] - Absatz [0046];<br>Abbildungen 1-4 *<br>* Absatz [0017] *<br>* Absatz [0028] - Absatz [0031] *<br>----- | 1-8,11,<br>13-15<br>9,10 | |
| Y<br><br>A | US 2022/089034 A1 (JING XIN [US] ET AL)<br>24. März 2022 (2022-03-24)<br>* Absatz [0006] - Absatz [0016];<br>Abbildungen 1-8 *<br>* Absatz [0030] - Absatz [0036] *<br>* Absatz [0057] - Absatz [0060] *<br>----- | 1,2,4-6,<br>13-15<br>9,10 | |
| A | REINHARD JOHANNES ET AL: "Optimal current setpoint computation for externally excited synchronous machines",<br>2022 IEEE CONFERENCE ON CONTROL TECHNOLOGY AND APPLICATIONS (CCTA), IEEE,<br>23. August 2022 (2022-08-23), Seiten 1319-1326, XP034242424,<br>DOI: 10.1109/CCTA49430.2022.9965988<br>[gefunden am 2022-12-08]<br>* das ganze Dokument *<br>----- | 1-15 | RECHERCHIERTE SACHGEBIETE (IPC)<br><br>H02P |

Der vorliegende Recherchenbericht wurde für alle Patentansprüche erstellt

1

| Recherchenort | Abschlußdatum der Recherche | Prüfer |
|---|---|---|
| München | 3. Dezember 2024 | Gospodinova, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 18 6418

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-2024

| Im Recherchenbericht angeführtes Patentdokument | Datum der Veröffentlichung | Mitglied(er) der Patentfamilie | Datum der Veröffentlichung |
|---|---|---|---|
| EP 4213368 A1 | 19-07-2023 | CN 118591980 A | 03-09-2024 |
| | | EP 4213368 A1 | 19-07-2023 |
| | | EP 4466784 A1 | 27-11-2024 |
| | | KR 20240134137 A | 06-09-2024 |
| | | WO 2023134940 A1 | 20-07-2023 |
| US 2023283211 A1 | 07-09-2023 | CN 117426049 A | 19-01-2024 |
| | | EP 4356511 A1 | 24-04-2024 |
| | | JP 2024521665 A | 04-06-2024 |
| | | KR 20240021165 A | 16-02-2024 |
| | | US 2022399844 A1 | 15-12-2022 |
| | | US 2023283211 A1 | 07-09-2023 |
| | | WO 2022265986 A1 | 22-12-2022 |
| US 2022089034 A1 | 24-03-2022 | CN 114337438 A | 12-04-2022 |
| | | DE 102021109538 A1 | 24-03-2022 |
| | | US 2022089034 A1 | 24-03-2022 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 4213368 A1
- DE 102014223014 A1